# EUROPEAN PATENT APPLICATION

(11) **EP 4 738 931 A1**
(43) Date of publication of application: **06.05.2026**
(21) Application number: 24850716.2
(22) Date of filing: 01.07.2024
(51) Int. Cl.: H04W 40/22

(54) **INFORMATION TRANSMISSION METHOD, AND USER EQUIPMENT AND STORAGE MEDIUM**

(30) Priority: 07.08.2023 CN 202310988867
(71) Applicant: Datang Mobile Communications Equipment Co., Ltd., Beijing 100085 (CN)
(72) Inventor: ZHAO, Yali, Beijing 100085 (CN)
(74) Representative: Ipsilon
(86) International application number: PCT/CN2024/102962
(87) International publication number: WO 2025/031065

(57) **Abstract**

Provided in the present application are an information transmission method, and a user equipment and a storage medium. The method comprises: receiving a first message sent by a previous-hop node in a first transmission direction, wherein the first message comprises a system information request related parameter and/or a paging related parameter; and sending a second message to a next-hop node in the first transmission direction, wherein the second message is generated on the basis of at least one first message. In the method in the present invention, when a remote user equipment (Remote UE) accesses a network device by means of a plurality of hops, the Remote UE can obtain system information and/or receive a Paging message.

## Description

### CROSS-REFERENCE

The present application cites Chinese Patent Application No. 2023109888671, entitled "Information Transmission Method, User Equipment and Storage Medium", filed on August 7, 2023, which is incorporated herein by reference in its entirety.

### TECHNICAL FIELD

The present application relates to the field of communication technologies, and in particular, to an information transmission method, a user equipment and a storage medium.

### BACKGROUND

In order to extend network coverage, one solution is to introduce a U2N Relay (UE-to-Network Relay). The relay may be a user equipment with a relay function, or a non-user equipment device dedicated to the relay function. An interface between the relay and a network is a Uu interface, and a direct communication interface (also referred to as PC5 interface) is used between the relay and a relayed user equipment (also referred to as remote user equipment (Remote UE)). Generally, one-hop relay is sufficient, but for some special scenarios such as earthquake scenarios, the entire network may crash, and it may be necessary to use multi-hop relay. In the multi-hop relay scenario, the user equipment may access the network through one U2N Relay and at least one U2U Relay (UE-to-Network Relay).

However, in the prior art, in the multi-hop relay scenario, currently, there is no relevant solution for ensuring that the remote user equipment or the relayed user equipment can acquire system information or receive a paging message.

### SUMMARY

An objective of the present application is to provide an information transmission method, a user equipment and a storage medium, which are used for enabling a remote user equipment to acquire system information or receive a paging message in a multi-hop relay scenario.

In a first aspect, embodiments of the present application provide an information transmission method applied to a UE-to-UE relay (U2U Relay), including:
receiving a first message sent by a previous-hop node in a first transmission direction, where the first message includes a system information request related parameter and/or a paging related parameter; and
sending a second message to a next-hop node in the first transmission direction, where the second message is generated on the basis of at least one first message;
where the system information request related parameter includes requested system information block (SIB) indication information and/or system information (SI) message indication information;
the paging related parameter includes user equipment identification information of the remote user equipment (Remote UE);
the previous-hop node includes a remote user equipment or U2U Relay and the next-hop node includes a U2U Relay or a UE-to-network relay (U2N Relay).

In the invention, the U2U Relay receives the system information request related parameter and/or the paging related parameter sent by the remote user equipment or the previous-hop U2U Relay, and forwards the information to the next-hop node, thereby sending the system information request related parameter and/or the paging related parameter to a network device.

Optionally, sending the second message to the next-hop node in the first transmission direction includes at least one of the following:
when the first message includes the system information request related parameter, sending the second message to the next-hop node in the first transmission direction;
when the first message includes the paging related parameter, sending the second message to the next-hop node in the first transmission direction;
when the first message includes the system information request related parameter and a first condition is met, sending the second message to the next-hop node in the first transmission direction; or
when the first message includes the paging related parameter and a second condition is met, sending the second message to the next-hop node in the first transmission direction.

Optionally, the first condition includes one of the following conditions or a combination thereof:
an SIB indicated by the SIB indication information or an SI message indicated by the SI message indication information is not stored;
the SIB indicated by the SIB indication information or the SI message indicated by the SI message indication information is stored and the SIB or the SI message is invalid;
a time interval between a moment of receiving the first message containing the system information request related parameter and a moment of receiving the first message containing the system information request related parameter last time is greater than a first preset threshold T1;
a content of the system information request related parameter contained in the received first message is different from that of the system information request related parameter contained in the first message received last time; or
the content of the system information request related parameter contained in the first message is different from the contents of the system information request related parameters contained in the first messages received last N times, where N is an integer greater than or equal to 1.

The second condition includes one of the following conditions or a combination thereof:
a time interval between a moment of receiving the first message containing the paging related parameter and a moment of receiving the first message containing the paging related parameter last time is greater than a first preset threshold T1; or
a content of the paging related parameter contained in the first message is different from contents of the paging related parameters contained in the first messages received last M times, where M is an integer greater than or equal to 1.

Optionally, the generation of the second message on the basis of the at least one first message includes one of the following:
directly taking the first message as the second message;
generating the second message according to at least two first messages received from one or more previous-hop nodes in the first transmission direction; or
generating the second message according to at least one first message received from one or more previous-hop nodes in the first transmission direction and the system information request related parameter and/or the paging related parameter corresponding to the U2U Relay.

Optionally, generating the second message according to the at least two first messages received from the one or more previous-hop nodes in the first transmission direction includes:
the second message including system information request related parameter and/or paging related parameter,
merging the system information request related parameters contained in the at least two first messages, and deleting repeated parts to obtain the system information request related parameter in the second message; and
merging the paging related parameters in the at least two first messages, and deleting repeated parts to obtain the paging related parameter in the second message.

When a plurality of first messages are received, in the method according to the invention, the information-request-related parameters in the plurality of first messages are merged, and if a plurality of parameters are the same (that is, repeated), only one of the parameters is reserved, and other repeated parameters are deleted, thereby realizing aggregate acquisition. Similarly, in the method according to the invention, the paging related parameters in the plurality of first messages are merged, and if a plurality of parameters are the same (that is, repeated), only one of the parameters is reserved, and other repeated parameters are deleted, thereby realizing aggregate acquisition. Therefore, a signaling quantity is reduced, and resource overhead is saved.

Optionally, generating the second message according to the at least one first message received from the one or more previous-hop nodes in the first transmission direction and the system information request related parameter and/or the paging related parameter corresponding to the U2U Relay includes:
the second message including system information request related parameter and/or paging related parameter,
merging the system information request related parameter contained in the at least one first message with the system information request related parameter corresponding to the U2U Relay, and deleting repeated parts to obtain the system information request related parameter in the second message; and
merging the paging related parameter in the at least one first message with the paging related parameter corresponding to the U2U Relay, and deleting repeated parts to obtain the paging related parameter in the second message.

In a second aspect, embodiments of the present application provide an information transmission method applied to a UE-to-UE relay (U2U Relay), including:
receiving a third message sent by a previous-hop node or a network device in a second transmission direction, where the third message includes system information and/or a paging message; and
sending a fourth message to a next-hop node in the second transmission direction, where the fourth message is generated according to at least one third message;
where the system information at least includes a system information block (SIB) or a system information (SI) message;
the previous-hop node includes a UE-to-network relay (U2N Relay) or U2U Relay, and the next-hop node includes a U2U Relay or Remote UE.

Optionally, the information transmission method according to the embodiment of the present application further includes: storing all or part of a content contained in the third message, and all or part of the content contained in the third message comprises at least one of the following:
storing the SIB or the SI message or the paging message contained in the third message;
when the SIB contained in the third message is not identical to an SIB currently stored by a user equipment, storing a different SIB;
when the SI message contained in the third message is not identical to an SI message currently stored by the user equipment, storing a different SI message; or
when a time interval between a third message receiving moment and a last third message receiving moment is greater than a second preset threshold T2, storing the SIB or the SI message or the paging message contained in the third message.

Optionally, the fourth message includes at least one of:
system information requested by a next-hop node of the U2U relay in the second transmission direction, where the system information requested by the next-hop node includes an SIB or an SI message; or
a paging message corresponding to the next-hop node of the U2U relay in the second transmission direction or a U2U relay and/or a remote user equipment connected to the next-hop node.

Optionally, sending the fourth message to the next-hop node in the second transmission direction includes:
in the case where a third condition is met, sending the fourth message to the next-hop node in the second transmission direction;
where the third condition includes one of the following conditions or a combination thereof:
   the paging message corresponding to the next-hop node in the second transmission direction is monitored;
   the paging message corresponding to the remote user equipment served by the next-hop node in the second transmission direction is monitored;
   the paging message corresponding to the U2U Relay served by the next-hop node in the second transmission direction is monitored;
   the SIB or the SI message requested by the next-hop node in the second transmission direction is acquired;
   an SIB or an SI message requested by the remote user equipment served by the next-hop node in the second transmission direction is acquired;
   an SIB or an SI message requested by the U2U Relay served by the next-hop node in the second transmission direction is acquired; or
   the system information is updated and the updated system information is acquired.

In the embodiment of the present invention, the first transmission direction is different from the second transmission direction. Optionally, the first transmission direction is a direction from the remote user equipment to a network side, and the second transmission direction is a direction from the network side to the remote user equipment.

In a third aspect, embodiments of the present application provide an information transmission method applied to a UE-to-network relay (U2N Relay), including:
receiving a second message sent by a previous-hop node in a first transmission direction, where the second message includes a system information request related parameter and/or a paging related parameter; and
sending a third message to a next-hop node in a second transmission direction, where the third message is a response message to the second message;
where the system information request related parameter includes requested system information block (SIB) indication information or system information (SI) message indication information;
the paging related parameter includes user equipment identification information of a remote user equipment (Remote UE) or user equipment identification information of a U2U Relay UE served by the U2N Relay;
the previous-hop node includes a U2U Relay, and the next-hop node includes a U2U Relay.

With the method according to the present invention, when receiving a request message (i.e., the second message) from the previous-hop U2U Relay in the first transmission direction, the U2N Relay replies the corresponding response message (i.e., the third message) to the next-hop node in the second transmission direction according to a content of the second message.

Optionally, sending the third message to the next-hop node in the second transmission direction includes:
in a case where a fourth condition is met, sending the third message to the next-hop node in the second transmission direction;
where the fourth condition includes one of the following conditions or a combination thereof:
   a paging message corresponding to the next-hop node in the second transmission direction is monitored;
   a paging message corresponding to a remote user equipment served by the next-hop node in the second transmission direction is monitored;
   a paging message corresponding to a U2U Relay served by the next-hop node in the second transmission direction is monitored;
   the SIB or the SI message requested by the next-hop node in the second transmission direction is acquired;
   an SIB or an SI message requested by the remote user equipment served by the next-hop node in the second transmission direction is acquired;
   an SIB or an SI message requested by the U2U Relay served by the next-hop node in the second transmission direction is acquired; or
   system information is updated and the updated system information is acquired.

Optionally, the third message is the response message to the second message, which includes one of the following cases or a combination thereof:
the response message includes a full or partial response to the SIB requested in the second message; or
the response message includes the paging message corresponding to the remote user equipment served by the next-hop node and/or the paging message corresponding to the U2U Relay served by the next-hop node.

Optionally, after the second message is received from the previous-hop node in the first transmission direction, the method further includes:
storing the requested system information block (SIB) indication information or system information (SI) message indication information in the second message; and/or
storing the user equipment identification information of the remote user equipment (Remote UE) in the second message.

In a fourth aspect, embodiments of the present application provide a UE-to-UE relay (U2U Relay), including:
a memory for storing a computer program; a transceiver for receiving and sending data under control of a processor; and the processor for reading the computer program in the memory and performing the following operations:
receiving a first message sent by a previous-hop node in a first transmission direction, where the first message includes a system information request related parameter and/or a paging related parameter; and
sending a second message to a next-hop node in the first transmission direction, where the second message is generated on the basis of at least one first message;
where the system information request related parameter includes requested system information block (SIB) indication information and/or system information (SI) message indication information;
the paging related parameter includes user equipment identification information of the remote user equipment (Remote UE);
the previous-hop node includes a remote user equipment or U2U Relay and the next-hop node includes a U2U Relay or a UE-to-network relay (U2N Relay).

Optionally, sending the second message to the next-hop node in the first transmission direction includes at least one of the following:
when the first message includes the system information request related parameter, sending the second message to the next-hop node in the first transmission direction;
when the first message includes the paging related parameter, sending the second message to the next-hop node in the first transmission direction;
when the first message includes the system information request related parameter and a first condition is met, sending the second message to the next-hop node in the first transmission direction; or
when the first message includes the paging related parameter and a second condition is met, sending the second message to the next-hop node in the first transmission direction.

Optionally, the first condition includes one of the following conditions or a combination thereof:
an SIB indicated by the SIB indication information or an SI message indicated by the SI message indication information is not stored;
the SIB indicated by the SIB indication information or the SI message indicated by the SI message indication information is stored and the SIB or the SI message is invalid;
a time interval between a moment of receiving the first message containing the system information request related parameter and a moment of receiving the first message containing the system information request related parameter last time is greater than a first preset threshold T1;
a content of the system information request related parameter contained in the received first message is different from that of the system information request related parameter contained in the first message received last time; or
the content of the system information request related parameter contained in the first message is different from the contents of the system information request related parameters contained in the first messages received last N times, where N is an integer greater than or equal to 1.

Optionally, the second condition includes one of the following conditions or a combination thereof:
a time interval between a moment of receiving the first message containing the paging related parameter and a moment of receiving the first message containing the paging related parameter last time is greater than a first preset threshold T1; or
a content of the paging related parameter contained in the first message is different from contents of the paging related parameters contained in the first messages received last M times, where M is an integer greater than or equal to 1.

Optionally, the generation of the second message on the basis of the at least one first message includes one of the following:
directly taking the first message as the second message;
generating the second message according to at least two first messages received from one or more previous-hop nodes in the first transmission direction; or
generating the second message according to at least one first message received from one or more previous-hop nodes in the first transmission direction and the system information request related parameter and/or the paging related parameter corresponding to the U2U Relay.

Optionally, generating the second message according to the at least two first messages received from the one or more previous-hop nodes in the first transmission direction includes:
the second message including system information request related parameter and/or paging related parameter,
merging the system information request related parameters contained in the at least two first messages, and deleting repeated parts to obtain the system information request related parameter in the second message; and
merging the paging related parameters in the at least two first messages, and deleting repeated parts to obtain the paging related parameter in the second message.

Optionally, generating the second message according to the at least one first message received from the one or more previous-hop nodes in the first transmission direction and the system information request related parameter and/or the paging related parameter corresponding to the U2U Relay includes:
the second message including system information request related parameter and/or paging related parameter,
merging the system information request related parameter contained in the at least one first message with the system information request related parameter corresponding to the U2U Relay, and deleting repeated parts to obtain the system information request related parameter in the second message; and
merging the paging related parameter in the at least one first message with the paging related parameter corresponding to the U2U Relay, and deleting repeated parts to obtain the paging related parameter in the second message.

In a fifth aspect, embodiments of the present application provide a UE-to-UE relay (U2U Relay), including:
a memory for storing a computer program; a transceiver for receiving and sending data under control of a processor; and the processor for reading the computer program in the memory and performing the following operations:
receiving a third message sent by a previous-hop node or a network device in a second transmission direction, where the third message includes system information and/or a paging message; and
sending a fourth message to a next-hop node in the second transmission direction, where the fourth message is generated according to at least one third message;
where the system information at least includes a system information block (SIB) or a system information (SI) message;
the previous-hop node includes a UE-to-network relay (U2N Relay) or U2U Relay, and the next-hop node includes a U2U Relay or Remote UE.

Optionally, the processor is further configured to read the computer program in the memory and perform the following operations:
storing all or part of a content contained in the third message, and all or part of the content contained in the third message comprises at least one of the following:
storing the SIB or the SI message or the paging message contained in the third message;
when the SIB contained in the third message is not identical to an SIB currently stored by a user equipment, storing a different SIB;
when the SI message contained in the third message is not identical to an SI message currently stored by the user equipment, storing a different SI message; or
when a time interval between a third message receiving moment and a last third message receiving moment is greater than a second preset threshold T2, storing the SIB or the SI message or the paging message contained in the third message.

Optionally, the fourth message includes at least one of:
system information requested by a next-hop node of the U2U relay in the second transmission direction, where the system information requested by the next-hop node includes an SIB or an SI message; or
a paging message corresponding to the next-hop node of the U2U relay in the second transmission direction or a U2U relay and/or a remote user equipment connected to the next-hop node.

Optionally, sending the fourth message to the next-hop node in the second transmission direction includes:
in a case where a third condition is met, sending the fourth message to the next-hop node in the second transmission direction;
where the third condition includes one of the following conditions or a combination thereof:
   the paging message corresponding to the next-hop node in the second transmission direction is monitored;
   the paging message corresponding to the remote user equipment served by the next-hop node in the second transmission direction is monitored;
   the paging message corresponding to the U2U Relay served by the next-hop node in the second transmission direction is monitored;
   the SIB or the SI message requested by the next-hop node in the second transmission direction is acquired;
   an SIB or an SI message requested by the remote user equipment served by the next-hop node in the second transmission direction is acquired;
   an SIB or an SI message requested by the U2U Relay served by the next-hop node in the second transmission direction is acquired; or
   the system information is updated and the updated system information is acquired.

In a sixth aspect, embodiments of the present application provide a UE-to-network relay (U2N Relay), including:
a memory for storing a computer program; a transceiver for receiving and sending data under control of a processor; and the processor for reading the computer program in the memory and performing the following operations:
receiving a second message sent by a previous-hop node in a first transmission direction, where the second message includes a system information request related parameter and/or a paging related parameter; and
sending a third message to a next-hop node in a second transmission direction, wherein the third message is a response message to the second message;
where the system information request related parameter includes requested system information block (SIB) indication information or system information (SI) message indication information;
the paging related parameter includes user equipment identification information of a remote user equipment (Remote UE) or user equipment identification information of a U2U Relay UE served by the U2N Relay;
the previous-hop node includes a U2U Relay, and the next-hop node includes a U2U Relay.

Optionally, sending the third message to the next-hop node in the second transmission direction includes:
in a case where a fourth condition is met, sending the third message to the next-hop node in the second transmission direction;
where the fourth condition includes one of the following conditions or a combination thereof:
   a paging message corresponding to the next-hop node in the second transmission direction is monitored;
   a paging message corresponding to a remote user equipment served by the next-hop node in the second transmission direction is monitored;
   a paging message corresponding to a U2U Relay served by the next-hop node in the second transmission direction is monitored;
   the SIB or the SI message requested by the next-hop node in the second transmission direction is acquired;
   an SIB or an SI message requested by the remote user equipment served by the next-hop node in the second transmission direction is acquired;
   an SIB or an SI message requested by the U2U Relay served by the next-hop node in the second transmission direction is acquired; or
   system information is updated and the updated system information is acquired.

Optionally, the third message is the response message to the second message, which includes one of the following cases or a combination thereof:
the response message includes a full or partial response to the SIB requested in the second message; or
the response message includes the paging message corresponding to the remote user equipment served by the next-hop node and/or the paging message corresponding to the U2U Relay served by the next-hop node.

Optionally, after the second message is received from the previous-hop node in the first transmission direction, the operations further include:
storing the requested system information block (SIB) indication information or system information (SI) message indication information in the second message; and/or
storing the user equipment identification information of the remote user equipment (Remote UE) in the second message.

In a seventh aspect, embodiments of the present application provide a UE-to-UE relay (U2U Relay), including:
a first receiving unit configured to receive a first message sent by a previous-hop node in a first transmission direction, where the first message includes a system information request related parameter and/or a paging related parameter; and
a first sending unit configured to send a second message to a next-hop node in the first transmission direction, where the second message is generated on the basis of at least one first message;
where the system information request related parameter includes requested system information block (SIB) indication information and/or system information (SI) message indication information;
the paging related parameter includes user equipment identification information of the remote user equipment (Remote UE);
the previous-hop node includes a remote user equipment or U2U Relay and the next-hop node includes a U2U Relay or a UE-to-network relay (U2N Relay).

In an eighth aspect, embodiments of the present application provide a UE-to-UE relay (U2U Relay), including:
a second receiving unit configured to receive a third message sent by a previous-hop node or a network device in a second transmission direction, where the third message includes a system information related parameter and/or a paging message; and
a second sending unit configured to send a fourth message to a next-hop node in the second transmission direction, where the fourth message is generated according to at least one third message;
where the system information related parameter at least includes a system information block (SIB) or a system information (SI) message;
the previous-hop node includes a UE-to-network relay (U2N Relay) or U2U Relay, and the next-hop node includes a U2U Relay or Remote UE.

In a ninth aspect, embodiments of the present application provide a UE-to-network relay (U2N Relay), including:
a third receiving unit configured to receive a second message sent by a previous-hop node in a first transmission direction, where the second message includes a system information request related parameter and/or a paging related parameter; and
a third sending unit configured to send a third message to a next-hop node in a second transmission direction, where the third message is a response message to the second message;
where the system information request related parameter includes requested system information block (SIB) indication information or system information (SI) message indication information;
the paging related parameter includes user equipment identification information of the remote user equipment (Remote UE);
the previous-hop node includes a U2U Relay, and the next-hop node includes a U2U Relay.

Embodiments of the present application provide a processor-readable storage medium having a computer program stored thereon, the computer program, when executed by a processor, implementing the steps of the above information transmission method.

The above technical solution of the present application has the following beneficial effects.

In the multi-hop scenario, through forwarding of the U2U Relay in the first transmission direction, the system information request related parameter and/or the paging related parameter of the remote user equipment or the U2U Relay is sent to the U2N Relay, so that the U2N Relay can obtain the corresponding system information and/or paging message according to the system information request related parameter and/or the paging related parameter. The U2N Relay can forward the acquired system information and/or paging message to the remote user equipment or the U2U Relay initiating the request through the U2U Relay in the second transmission direction, thereby solving the problem that the remote user equipment or the U2U Relay cannot acquire the system information or paging message in the multi-hop relay scenario.

### BRIEF DESCRIPTION OF THE DRAWINGS

Various other advantages and merits will become apparent to those skilled in the art by reading through the following detailed description of embodiments. Figures are only intended to illustrate embodiments and not construed as limiting the present application. In all figures, like reference numerals denote like parts. In the drawings:
FIG. 1 shows a schematic diagram of a network centralized control communication manner in an LTE system;
FIG. 2 shows a schematic diagram of UE-to-UE discovery or communication;
FIG. 3 shows a schematic diagram in a single-hop relay scenario;
FIG. 4 shows a schematic diagram in a multi-hop relay scenario;
FIG. 5 is a schematic overall flow diagram of an information transmission method according to an embodiment of the present application;
FIG. 6 shows a first schematic diagram of a U2U Relay information transmission method according to an embodiment of the present application;
FIG. 7 shows a second schematic diagram of a U2U Relay information transmission method according to an embodiment of the present application;
FIG. 8 shows a third schematic diagram of a U2U Relay information transmission method according to an embodiment of the present application;
FIG. 9 shows a fourth schematic diagram of a U2U Relay information transmission method according to an embodiment of the present application;
FIG. 10 shows a first schematic diagram of a U2N Relay information transmission method according to an embodiment of the present application;
FIG. 11 shows a second schematic diagram of a U2N Relay information transmission method according to an embodiment of the present application;
FIG. 12 shows a third schematic diagram of a U2N Relay information transmission method according to an embodiment of the present application;
FIG. 13 shows a first schematic structural diagram of a U2U Relay according to an embodiment of the present application;
FIG. 14 shows a second schematic structural diagram of a U2U Relay according to an embodiment of the present application;
FIG. 15 shows a first schematic structural diagram of a U2N Relay according to an embodiment of the present application;
FIG. 16 shows a third schematic structural diagram of a U2U Relay according to an embodiment of the present application;
FIG. 17 shows a fourth schematic structural diagram of a U2U Relay according to an embodiment of the present application; and
FIG. 18 shows a second schematic structural diagram of a U2N Relay according to an embodiment of the present application.

### DETAILED DESCRIPTION

To make the technical problems, technical solutions and advantages of the present application more apparent, the following detailed description is given with reference to the accompanying drawings and specific embodiments. In the following description, specific details such as specific configurations and components are provided merely to facilitate a thorough understanding of embodiments of the application. It will therefore be apparent to those skilled in the art that various changes and modifications can be made in the embodiments described herein without departing from the scope and spirit of the application. In addition, descriptions of well-known functions and constructions are omitted for clarity and conciseness.

It should be appreciated that reference throughout this specification to "one embodiment" or "an embodiment" means that a particular feature, structure or characteristic described in connection with the embodiment is included in at least one embodiment of the present application. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

In various embodiments of the present application, it should be understood that the sequence numbers of the following processes do not mean the execution sequence, and the execution sequence of each process should be determined by the function and the inherent logic of the process, and should not constitute any limitation to the implementation process of the embodiments of the present application.

In the embodiments of the present application, the term "and/or" describes an association relationship between associated objects, and indicates that three relationships may exist. For example, A and/or B may indicate three cases: only A exists; both A and B exist; and only B exists. The symbol "/" generally indicates that associated objects have a relationship of "or".

The term "plurality" in the embodiments of the present application means two or more, and other quantifiers are similar thereto.

The terminal related in the embodiments of the present application may be a device providing voice and/or data connectivity for a user, a handheld device having a wireless connection function, other processing devices connected to a wireless modem, or the like. The name of the terminal may be different in different systems. For example, in a 5G system, the terminal may be referred to as a User Equipment (UE). A wireless terminal device may be communicated with one or more Core Networks (CNs) via a Radio Access Network (RAN), and the wireless terminal device may be a mobile terminal device such as a mobile telephone (or "cellular" telephone) and a computer having a mobile terminal device, e.g., a portable, pocket, handheld, computer-built-in or vehicle-mounted mobile apparatus, and may exchange languages and/or data with the RAN. Examples of the device include Personal Communication Service (PCS) phones, cordless phones, Session Initiation Protocol (SIP) phones, Wireless Local Loop (WLL) stations, Personal Digital Assistants (PDAs), or the like. The wireless terminal device may also be referred to as a system, a subscriber unit, a subscriber station, a mobile station, a mobile, a remote station, an access point, a remote terminal, an access terminal, a user terminal, a user agent, and a user device, which is not limited in the embodiments of the present application.

The network device related in the embodiment of the present application may be a base station, and the base station may include a plurality of cells for serving the terminal. The base station may also be called an access point, or a device in the access network that is communicated with the wireless terminal device over an air interface through one or more sectors, or other names, depending on particular application occasions. The network device may be configured to exchange received air frames with Internet Protocol (IP) packets as a router between the wireless terminal device and the rest of the access network, which may include an IP communications network. The network device may also coordinate attribute management for the air interface. For example, the network device related in the embodiment of the present application may be a network device (Base Transceiver Station, BTS) in a Global System for Mobile Communications (GSM) or Code Division Multiple Access (CDMA), a network device (NodeB) in Wide-band Code Division Multiple Access (WCDMA), an evolved network device (evolutional Node B, eNB or e-NodeB) in a long term evolution (LTE) system, a 5G base station (gNB) in a 5G network architecture (next generation system), a home evolved base station (Home evolved Node B, HeNB), a relay node, a home base station (femto), a pico base station (pico), or the like, which is not limited in the embodiment of the present application. In some network structures, the network device may include centralized unit (CU) nodes and distributed unit (DU) nodes, which may be geographically separated.

Exemplarily, in an embodiment of the present application, one or more antennas may be respectively used between the network device and the terminal device for Multi Input Multi Output (MIMO) transmission, and the MIMO transmission may be Single User MIMO (SU-MIMO) or Multi-User MIMO (MU-MIMO). According to the form and the number of antenna combinations, the MIMO transmission can be 2D-MIMO, 3D-MIMO, FD-MIMO or massive-MIMO, and can also be diversity transmission, precoding transmission, beamforming transmission, etc.

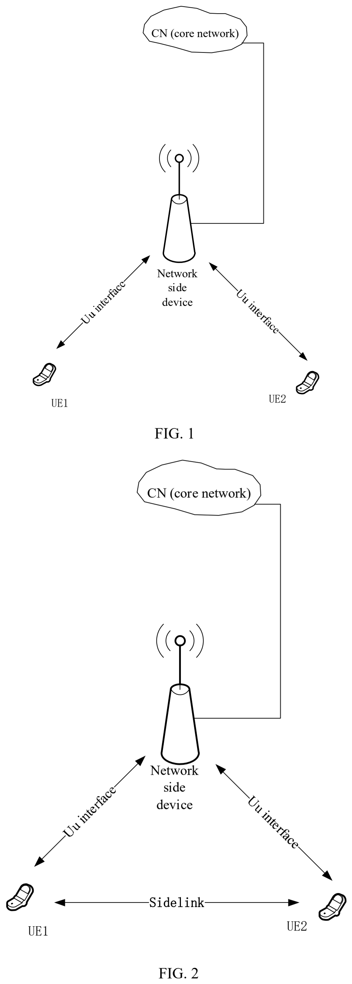

In traditional wireless communication, a cellular network communication manner is adopted, that is, a user equipment and a network side device transmit uplink and downlink data/control information through a Uu interface, as shown in FIG. 1. Direct communication is the communication that nearby user equipments can transfer data over a direct communication link (also known as Sidelink or PC5) over a close range. A wireless interface corresponding to the Sidelink is referred to as a direct communication interface (also referred to as a Sidelink interface or PC5 interface), and as shown in FIG. 2, UE 1 and UE 2 may communicate via the direct communication interface.

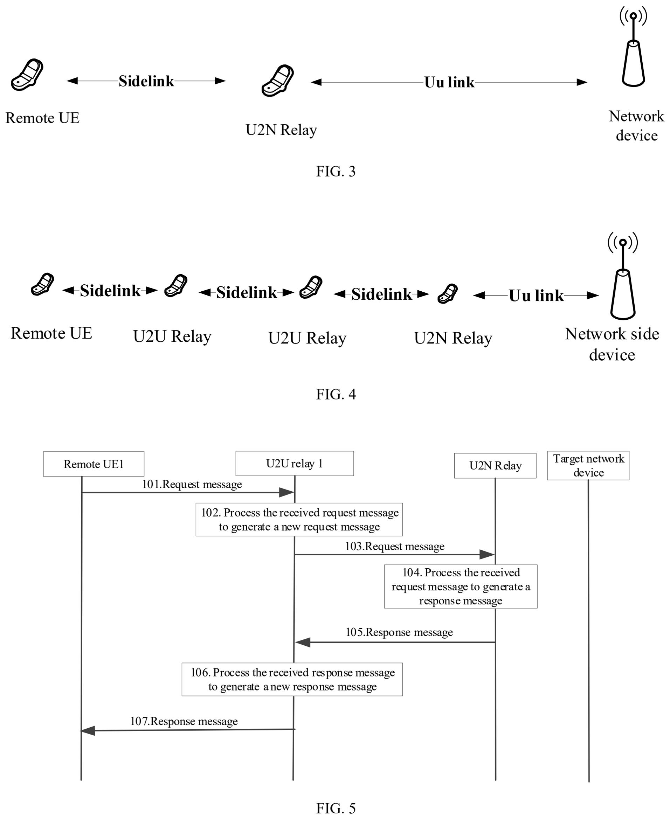

To extend network coverage, relays are introduced. If a direct communication interface is used between the relay and the user equipment (also referred to as a remote user equipment or Remote UE), the relay is also referred to as a Sidelink relay (SL Relay). In the present application, the relay may be a user equipment with a relay function, or may be a device dedicated for relaying such as an RSU (Road Side Unit). For a user equipment-to-network relay (i.e., UE-to-Network Relay, abbreviated as U2N Relay), an interface between the relay and the network is a Uu interface, and an interface between the relay and a relayed user equipment (referred to as a remote user equipment or Remote UE in the present application) is a Sidelink interface (also referred to as a direct communication interface, or bypass interface or PC5 interface). In the case of only 1 relay, the relay is called a single-hop U2N Relay, as shown in FIG. 3. The remote UE communicates with the U2N Relay through the Sidelink interface, and the U2N Relay communicates with the network side device through the Uu interface.

If the remote user equipment cannot be connected to the network through one relay, multi-hop relay may be introduced, that is, multiple relays are required, as shown in FIG. 4. The multi-hop relay scenario includes one U2N Relay and one or more user equipment-to-user equipment relays (i.e., UE-to-UE Relays, abbreviated as U2U relays). The U2U Relay may be a user equipment having a relay function, or may be a device dedicated to the UE-to-UE relay.

However, in the prior art, in the multi-hop relay scenario, currently, there is no relevant solution for ensuring that the remote user equipment or the relayed user equipment can acquire system information or receive a paging message.

In order to solve the above technical problem, the present invention provides an information transmission method, a user equipment and a storage medium, which are configured for enabling the remote user equipment to acquire the system information or receive the paging message in the multi-hop relay scenario.

It should be noted that, in the present invention, a first transmission direction may be an uplink transmission direction (i.e., a transmission direction from the remote user equipment to a network device, or a transmission direction from a U2U Relay to the network device, or a transmission direction from a U2N Relay to the network device), and a second transmission direction may be a downlink transmission direction (i.e., a transmission direction from the network device to the remote user equipment, or a transmission direction from the network device to the U2U Relay, or a transmission direction from the network device to the U2N Relay), that is, the first transmission direction and the second transmission direction are two completely opposite transmission directions.

It should be noted that a previous-hop node is a previous-hop node in the first transmission direction or the second transmission direction. For example, in the first transmission direction, the previous-hop node may be a remote user equipment or a U2U Relay. In the first transmission direction, a next-hop node may be a U2U Relay or a U2N Relay. In the second transmission direction, the previous-hop node may be a U2N Relay or a U2U Relay. In the second transmission direction, the next-hop node may be a U2U Relay or a remote user equipment.

It should be noted that the information transmission method according to the present invention may be used in a scenario with one U2U Relay and one U2N Relay, or a scenario with N1 U2U Relays and M1 U2N Relays, where N1 and M1 are integers greater than or equal to 1.

The method according to the present invention is described below with a scenario including one U2N Relay and 2 U2U Relays, and as shown in FIG. 5, the information transmission method according to an embodiment of the present invention includes the following steps.

Step 101: sending a request message to U2U Relay 1 by a remote user equipment.

The request message includes a content that the remote user equipment needs to request, and may include a system information request related parameter and/or a paging related parameter, for example.

Step 102: receiving a request message from a previous-hop node by the U2U Relay 1, and processing the received request message to generate a new request message.

The request message received by the U2U Relay 1 is all or part of the request message sent in the step 101. The new request message may be generated from only at least one received request message, that is, from N2 received request messages, N2 being an integer greater than or equal to 1. Alternatively, the U2U Relay 1 may generate the new request message according to at least one received request message and the system-information-related parameter and/or the paging related parameter to be requested by the U2U Relay 1. Alternatively, the U2U Relay 1 forwards the received request message directly.

In the embodiment of the invention, the system information request related parameter includes requested system information block (SIB) indication information and/or system information (SI) message indication information; the paging related parameter includes user equipment identification information of the remote user equipment (Remote UE).

As an optional example, the new request message includes a system information request related parameter and/or a paging related parameter. The system information request related parameter in the new request message may be generated only according to the received request message, or on the basis of the system information request related parameter of the received request message, and the U2U Relay 1 adds a system information request related parameter required to be requested. The paging related parameter in the new request message may be generated only according to the received request message, or on the basis of the paging related parameter of the received request message, and the U2U Relay 1 adds a paging related parameter required by the U2U Relay 1 to form the paging related parameter in the new request message.

Step 103: sending the new request message to a next-hop node in a first transmission direction by the U2U Relay 1.

Step 104: receiving a request message from a previous-hop node in the first transmission direction by a U2N Relay, and processing the received request message to generate a response message.

The response message is a response message to the received request message. For example, the received request message includes a system information request related parameter and/or a paging related parameter, and the system information request related parameter includes requested system information block (SIB) indication information or system information (SI) message indication information; the paging related parameter includes user equipment identification information of the remote user equipment (Remote UE) or user equipment identification information of the U2U Relay UE served by the U2N Relay. The response message includes at least part or all of a system information block (SIB) and/or includes at least a paging message of the remote user equipment or a paging message of the U2U Relay UE served by the U2N Relay.

Step 105: sending a response message to a next-hop node in a second transmission direction by the U2N Relay.

The sent response message is the response message generated in the step 104.

Step 106: receiving a response message from a previous-hop node in the second transmission direction or a network side device by the U2U Relay 1, and generating a new response message according to the received response message.

The response message received by the U2U Relay 1 is all or part of the request message sent in the step 105. The new response message is generated from at least one received response message, that is, from N3 received response messages, N3 being an integer greater than or equal to 1.

Step 107: sending a response message to the next-hop node in the second transmission direction by the U2U Relay 1.

The sent response message is the new response message determined in the step 106.

With the method according to this embodiment, in the first transmission direction, if the U2U Relay UE receives the request message from the previous-hop node, and if the request message is used to request system information required by the Remote UE and/or provide Remote UE Paging related information, the U2U Relay UE is triggered to send the request message to the next-hop node in the first transmission direction. In the second transmission direction, if the U2U Relay or the U2N Relay receives the response message from the previous-hop node, the U2U Relay or the U2N Relay is triggered to send the response message to the next-hop node. Therefore, the remote user equipment can be ensured to acquire the required system information from the network device or receive the paging message sent by the network device.

It should be noted that if there are a plurality of U2U Relays, processing manners of the U2U Relays are the same.

It should be noted that, in the present invention, sending a message to a target device means that the message is sent for the target device, that is, a recipient of the sent message is the target device. For example, sending the request message to the U2U Relay 1 indicates that the request message is sent for the U2U Relay 1, the recipient is the U2U Relay 1, and the message is not sent to devices other than the U2U Relay 1. For another example, sending the response message to the next-hop node in the second transmission direction indicates that the response message is sent for the next-hop node in the second transmission direction, the recipient is the next-hop node in the second transmission direction, and the message is not sent to other nodes than the next-hop node in the second transmission direction.

The technical solutions in the embodiments of the present application are clearly and completely described with reference to the accompanying drawings of the present application, and apparently, the described embodiments are not all but only a part of the embodiments of the present application. All other embodiments obtained by a person of ordinary skill in the art based on the embodiments of the present application without creative efforts shall fall within the protection scope of the present application.

### First Embodiment

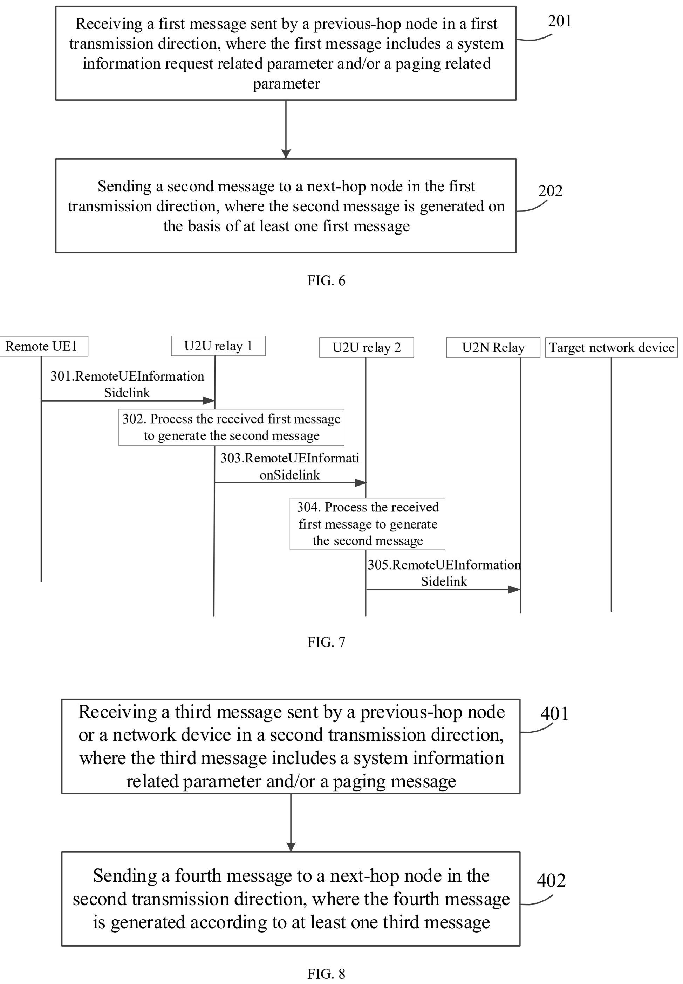

An information transmission method according to this embodiment is applied to a UE-to-UE relay (U2U Relay), as shown in FIG. 6, and includes:
step 201: receiving a first message sent by a previous-hop node in a first transmission direction, where the first message includes a system information request related parameter and/or a paging related parameter; and
step 202: sending a second message to a next-hop node in the first transmission direction, where the second message is generated on the basis of at least one first message;
where the system information request related parameter includes requested system information block (SIB) indication information and/or system information (SI) message indication information;
the paging related parameter includes user equipment identification information of the remote user equipment (Remote UE); and
the previous-hop node includes a remote user equipment or U2U Relay, and the next-hop node includes a U2U Relay or a UE-to-network relay (U2N Relay).

In this embodiment, in a multi-hop U2N Relay scenario, if a U2U Relay UE receives the first message from the previous-hop node, and if the first message is used to request system information required by the Remote UE and/or provide Remote UE Paging related information, the U2U Relay UE is triggered to send the second message to the next-hop node.

The first message is a request message, and the second message is a new request message generated by the U2U Relay according to the first message.

As an optional example, sending the second message to the next-hop node in the first transmission direction includes at least one of the following steps:
when the first message includes the system information request related parameter, sending the second message to the next-hop node in the first transmission direction;
when the first message includes the paging related parameter, sending the second message to the next-hop node in the first transmission direction;
when the first message includes the system information request related parameter and a first condition is met, sending the second message to the next-hop node in the first transmission direction; or
when the first message includes the paging related parameter and a second condition is met, sending the second message to the next-hop node in the first transmission direction.

As an optional example, the system information request related parameter may be a related parameter used by the remote user equipment served by the U2U Relay for requesting the system information, or a related parameter used by another U2U Relay in the first transmission direction for requesting the system information, or may include both the related parameter used by the remote user equipment served by the U2U Relay for requesting the system information and the related parameter used by another U2U Relay in the first transmission direction for requesting the system information.

As an optional example, the paging related parameter may include user equipment identification information of the remote user equipment served by the U2U Relay, or user equipment identification information of another UE-to-UE relay user equipment (U2U Relay UE) in the first transmission direction, or may include both the user equipment identification information of the remote user equipment served by the U2U Relay and the user equipment identification information of another U2U Relay UE in the first transmission direction.

As an optional example, the user equipment identification information may be one of: TMSI (Temporary Mobile Subscriber Identity/Identifier), 5G-S-TMSI (5Generation-Short-Temporary Mobile Subscriber Identity/Identifier), GUTI (Globally Unique Temporary UE Identity) or I-RNTI (Inactive - Radio Network Temporary Identifier).

As an optional example, the system information block (SIB) indication information is configured to indicate a requested SIB, and may be, for example, SIB1, SIB2, SIB3, SIB4, SIB5, ..., SIB18, or the like, or may include indication information of multiple SIBs.

As an optional example, the indication information of multiple SIBs may be represented in the form of an SIB list.

As an optional example, the system information block (SIB) indication information may also be SIB indication information requested by multiple user equipment, for example, it may include the SIB indication information requested by the remote user equipment and a previous-hop U2U Relay in the first transmission direction. The SIB indication information requested by the remote user equipment may include one or more SIB indication information, and the SIB indication information requested by the previous-hop U2U Relay in the first transmission direction may also include one or more SIB indication information.

As an optional example, the system information (SI) message indication information is configured to indicate a requested SI message, and may include indication information of one SI message, or indication information of multiple SI messages.

As an optional example, the system information (SI) message indication information may also be SI message indication information requested by multiple user equipment, for example, it may include SI message indication information requested by the remote user equipment and the previous-hop U2U Relay in the first transmission direction. The SI message indication information requested by the remote user equipment may include one or more SI message indication information, and the SI message indication information requested by the previous-hop U2U Relay in the first transmission direction may also include one or more SI message indication information.

As an optional example, the first condition includes one of the following conditions or a combination thereof:
an SIB indicated by the SIB indication information or an SI message indicated by the SI message indication information is not stored;
the SIB indicated by the SIB indication information or the SI message indicated by the SI message indication information is stored and the SIB or the SI message is invalid;
a time interval between a moment of receiving the first message containing the system information request related parameter and a moment of receiving the first message containing the system information request related parameter last time is greater than a first preset threshold T1; or
the content of the system information request related parameter contained in the first message is different from the contents of the system information request related parameters contained in the first messages received last N times, where N is an integer greater than or equal to 1.

As an optional example, the second condition includes one of the following conditions or a combination thereof:
a time interval between a moment of receiving the first message containing the paging related parameter and a moment of receiving the first message containing the paging related parameter last time is greater than a first preset threshold T1;
a content of the paging related parameter contained in the first message is different from contents of the paging related parameters contained in the first messages received last M times, where M is an integer greater than or equal to 1.

As an optional example, the first preset threshold T1 may be a decision duration or a timer length configured or preconfigured by the network.

As an optional example, the SIB or SI message indicated by the indication information is stored, and the SIB or SI message is invalid, which means that an effective time limit of the stored SIB is exceeded or a value of a valid tag corresponding to the SIB or SI message is changed.

As an optional example, the generation of the second message on the basis of the at least one first message includes one of the following steps:
directly taking the first message as the second message;
generating the second message according to at least two first messages received from one or more previous-hop nodes in the first transmission direction; or
generating the second message according to at least one first message received from one or more previous-hop nodes in the first transmission direction and the system information request related parameter and/or the paging related parameter corresponding to the U2U Relay.

That is, the generation of the second message on the basis of the at least one first message includes one of three cases (case 1, case 2, and case 3).

Case 1: the first message is directly taken as the second message. After receiving the first message, the U2U Relay directly takes a content of the first message as a content of the second message without additional processing.

Case 2: the second message is generated according to the at least two first messages received from the one or more previous-hop nodes in the first transmission direction. That is, the U2U Relay receives at least two first messages, and processes the received at least two messages to generate the second message. As an optional example, the processing may include:
the second message including system information request related parameter and/or paging related parameter,
merging the system information request related parameters contained in the at least two first messages, and deleting repeated parts to obtain the system information request related parameter in the second message; and
merging the paging related parameters in the at least two first messages, and deleting repeated parts to obtain the paging related parameter in the second message.

For example, if the U2U Relay receives 3 first messages, and the included system information request related parameters are {SIB1, SIB3, SIB5}, {SIB1, SIB2, SIB4, SIB5}, and {SIB1, SIB2}, the system information request related parameters of the three first messages are merged to obtain {SIB1, SIB3, SIB5, SIB1, SIB2, SIB4, SIB5, SIB1, SIB2}, and after the repeated parts are deleted, the obtained system information request related parameter in the second message is: {SIB1, SIB2, SIB3, SIB4, SIB5}. For another example, if the U2U Relay receives 4 first messages, and the included system information request related parameters are: {SIB1}, {SIB4}, {SIB5}, and {SIB5}, the merged system information request related parameter is: {SIB1, SIB4, SIB5, SIB5}, and after the repeated part is deleted, the obtained system information request related parameter in the second message is: {SIB1, SIB4, SIB5}.

As another example, if the U2U Relay receives first messages from Remote UE 1 and Remote UE 2 respectively, the Remote UE 1 requests {SIB5, SIB16, SIB17}, and the Remote UE 2 requests {SIB9, SIB14, SIB16}. When the second message is generated according to the first messages, the second message can request {SIB5, SIB9, SIB14, SIB16, SIB17}.

For another example: if the U2U Relay receives 5 first messages, and the included system information request related parameters are: {SI message1, SI message3}, {SI message4}, {SI message5}, {SI message4}, {SI message2, SI message3}, the merged system information request related parameter is: {SI message1, SI message3, SI message4, SI message5, SI message4, SI message2, and SI message3}, and after the repeated parts are deleted, the obtained system information request related parameter in the second message is: {SI message1, SI message2, SI message3, SI message4, SI message5}.

For another example, if the U2U Relay receives 2 first messages, and the included paging related parameters are {5G-S-STMI1} and {5G-S-STMI2}, the merged paging related parameter is {5G-S-STMI1, 5G-S-STMI2}, no repeated parts exist, and deletion is not required.

For another example, if the U2U Relay receives 3 first messages, and the included paging related parameters are {5G-S-STMI1}, {5G-S-STMI1}, and {5G-S-STMI2} respectively, the merged paging related parameter is {5G-S-STMI1, 5G-S-STMI1, 5G-S-STMI2}, and after the repeated part is deleted, the obtained paging related parameter in the second message is: {5G-S-STMI1, 5G-S-STMI2}.

5G-S-STMI1 and 5G-S-STMI2 both indicate that the user equipment identification information is 5G-S-STMI, and 5G-S-STMI1 and 5G-S-STMI2 are two different user equipment identifications.

Case 3: the second message is generated according to the at least one first message received from the one or more previous-hop nodes in the first transmission direction and the system information request related parameter and/or the paging related parameter corresponding to the U2U Relay. After the U2U Relay receives the first message, if the U2U Relay also needs to request system information or add a paging related parameter, the U2U Relay combines the request information with the first message to generate the system information request related parameter and/or paging related parameter in the second message. As an optional example, this process may include:
merging the system information request related parameter contained in the at least one first message with the system information request related parameter corresponding to the U2U Relay, and deleting repeated parts to obtain the system information request related parameter in the second message; and
merging the paging related parameter in the at least one first message with the paging related parameter corresponding to the U2U Relay, and deleting repeated parts to obtain the paging related parameter in the second message.

The operation of merging the system information request related parameter contained in the first message and the system information request related parameter corresponding to the U2U Relay by the U2U Relay, and deleting the repeated part is the same as that of the processing in the case 2, and is not repeated herein. Correspondingly, the operation of merging the paging related parameter in the first message and the paging related parameter corresponding to the U2U Relay by the U2U Relay, and deleting the repeated part is the same as that of the processing in the case 2, and is not repeated herein.

As an optional example, in the embodiment of the present invention, the first message and the second message are RemoteUEInformationSidelink messages, or other messages.

The first embodiment is further described below with a scenario including 2 U2U Relays and one U2N Relay, and as shown in FIG. 7, a remote user equipment (Remote UE 1) is connected to a U2U Relay 1, the U2U Relay 1 is connected to a U2U Relay 2, the U2U Relay 2 is connected to a U2N Relay, and the U2N Relay is connected to a network side device. It should be noted that the first message received by the U2U Relay 2 is the second message sent by the U2U Relay 1, that is, for the U2U Relay 1, the second message is sent to the next-hop node in the first transmission direction, and for the U2U Relay 2, the first message is received from the previous-hop node in the first transmission direction.

Step 301: sending a RemoteUEInformationSidelink message to the U2U Relay 1 by the remote user equipment 1.

If the Remote UE 1 needs to request system information, the RemoteUEInformationSidelink message at least needs to contain an SIB list to be requested by the Remote UE 1.

Step 302: processing the received first message by the U2U Relay 1 to generate the second message.

The U2U Relay 1 receives the RemoteUEInformationSidelink message, and for the U2U Relay 1, the RemoteUEInformationSidelink message received by the U2U Relay 1 from the previous-hop Remote UE is the first message, and the RemoteUEInformationSidelink message sent by the U2U Relay 1 to the next-hop U2U Relay 2 is the second message.

After the U2U Relay 1 receives the first message from the previous-hop node, if the first message is used to request the system information required by the Remote UE, the U2U Relay 1 is triggered to send the second message to the next-hop node U2U Relay 2. Optionally, the U2U Relay 1 is triggered to forward the second message to the next-hop node only when the first condition is met. The first condition includes one of the following conditions or a combination thereof:
an SIB indicated by the SIB indication information or an SI message indicated by the SI message indication information is not stored;
the SIB indicated by the SIB indication information or the SI message indicated by the SI message indication information is stored and the SIB or the SI message is invalid;
a time interval between a moment of receiving the first message containing the system information request related parameter and a moment of receiving the first message containing the system information request related parameter last time is greater than a first preset threshold T1;
the content of the system information request related parameter contained in the first message is different from the contents of the system information request related parameters contained in the first messages received last N times, where N is an integer greater than or equal to 1.

As a preferred example, the time interval from the moment of receiving the first message and the moment of receiving the first message last time is greater than the first preset threshold T1, and T1 may be a decision duration or a timer length configured or preconfigured by the network. If the timer length is configured, a timer is started at the moment of receiving the first message last time. For example, the timer is started when the UE receives the first message, and if the first message is received before the timer expires, the U2U Relay 1 is not triggered to send the second message to the next-hop node U2U Relay 2, and only if the first message is received after the timer expires, the U2U Relay 1 is triggered to send the second message to the next-hop node U2U Relay 2. Alternatively, the timer is started when the U2U Relay 1 receives the first message, and if the first message is received before the timer expires, the U2U Relay 1 is not triggered to send the second message to the next-hop node U2U Relay 2, and only after the timer expires, the U2U Relay 1 generates the second message according to the one or more first messages received during running of the timer, and the U2U Relay 1 is triggered to send the second message to the next-hop node U2U Relay 2.

Step 303: sending the second message (i.e., the RemoteUEInformationSidelink message) generated in the step 302 to the U2U Relay 2 by the U2U Relay 1.

Step 304: processing the received first message by the U2U Relay 2 to generate the second message.

The processing after the U2U Relay 2 receives the first message is the same as that of the U2U Relay 1, and is not repeated herein.

Step 305: sending the second message (i.e., the RemoteUEInformationSidelink message) to the next-hop node U2N Relay by the U2U Relay 2.

### Second Embodiment

Based on the same inventive concept, an embodiment of the present invention provides an information transmission method which is applied to a UE-to-UE relay (U2U Relay), as shown in FIG. 8, and includes:
step 401: receiving a third message sent by a previous-hop node or a network device in a second transmission direction, where the third message includes system information and/or a paging message; and
step 402: sending a fourth message to a next-hop node in the second transmission direction, where the fourth message is generated according to at least one third message;
where the system information at least includes a system information block (SIB) or a system information (SI) message; and
the previous-hop node includes a UE-to-network relay (U2N Relay) or U2U Relay, and the next-hop node includes a U2U Relay or Remote UE.

The second transmission direction is different from the first transmission direction.

As an optional example, the system information block (SIB) is an SIB indicated by requested system information block (SIB) indication information, that is, the SIB is a response to a requested system information block in the first transmission direction.

As an optional example, the paging message is a paging message corresponding to a paged user equipment, i.e., a paging message corresponding to a user equipment indicated by user equipment identification information provided in the first transmission direction.

As an optional example, the information transmission method according to the second embodiment further includes: storing all or part of a content contained in the third message, which includes at least one of the following steps:
storing the SIB or the SI message or the paging message contained in the third message;
when the SIB contained in the third message is not identical to an SIB currently stored by a user equipment, storing a different SIB;
when the SI message contained in the third message is not identical to an SI message currently stored by the user equipment, storing a different SI message; or
when a time interval between a third message receiving moment and a last third message receiving moment is greater than a second preset threshold T2, storing the SIB or the SI message or the paging message contained in the third message.

The second preset threshold T2 may be a decision duration or a timer length configured or preconfigured by the network.

It can be understood that, after receiving the third message, the U2U Relay may store the content of the third message directly or determine whether to store the content according to determinations of different contents. That is, for the SIB, when the SIB contained in the third message is not identical to the SIB currently stored by the user equipment, the different SIB is stored; and for the SI message, when the SI message contained in the third message is not identical to the SI message currently stored by the user equipment, the different SI message is stored.

As an optional example, after receiving the third message, the U2U Relay may also determine whether to store the third message according to the time interval. For example, when the time interval between the third message receiving moment and the last third message receiving moment is greater than the second preset threshold T2, the SIB or SI message or paging message included in the third message is stored.

As an optional example, the fourth message includes at least one of:
system information requested by a next-hop node of the U2U relay in the second transmission direction, where the system information requested by the next-hop node includes an SIB or an SI message; or
a paging message corresponding to the next-hop node of the U2U relay in the second transmission direction or a U2U relay and/or a remote user equipment connected to the next-hop node.

As an optional example, sending the fourth message to the next-hop node in the second transmission direction includes:
in the case where a third condition is met, sending the fourth message to the next-hop node in the second transmission direction;
where the third condition includes one of the following conditions or a combination thereof:
   the paging message corresponding to the next-hop node in the second transmission direction is monitored;
   the paging message corresponding to the remote user equipment served by the next-hop node in the second transmission direction is monitored;
   the paging message corresponding to the U2U Relay served by the next-hop node in the second transmission direction is monitored;
   the SIB or the SI message requested by the next-hop node in the second transmission direction is acquired;
   an SIB or an SI message requested by the remote user equipment served by the next-hop node in the second transmission direction is acquired;
   an SIB or an SI message requested by the U2U Relay served by the next-hop node in the second transmission direction is acquired; or
   the system information is updated and the updated system information is acquired.

It is to be understood that the monitoring of the paging message corresponding to the next-hop node in the second transmission direction may mean that, if the next-hop node in the second transmission direction is a remote user equipment, and the user equipment identification information is provided through the first transmission direction, when the U2U Relay monitors the paging message corresponding to the remote user equipment, the fourth message is sent to the next-hop node in the second transmission direction, the fourth message including the paging message of the remote user equipment.

It is to be understood that the monitoring of the paging message corresponding to the user equipment served by the next-hop node in the second transmission direction may mean that, if the next-hop node in the second transmission direction is also a U2U Relay, for example, U2U Relay 1, the U2U Relay 1 serves one remote user equipment, and the user equipment identification information of the remote user equipment is provided through the first transmission direction, when the U2U Relay monitors the paging message corresponding to the remote user equipment, the fourth message is sent to the next-hop node U2U Relay 1 in the second transmission direction, the fourth message including the paging message of the remote user equipment.

It is to be understood that the monitoring of the paging message corresponding to the U2U Relay served by the next-hop node in the second transmission direction may mean that, for example, the next-hop node in the second transmission direction is a U2U Relay 1, and a U2U Relay UE 3 is served by the U2U Relay 1, that is, the U2U Relay UE 3 is both a user equipment and a relay, that is, the U2U Relay UE 3 is connected to the U2U Relay 1. If the U2U Relay UE 3 requests the paging message, for example, the user equipment identification information of the U2U Relay UE 3 is provided through the first transmission direction, when the U2U Relay monitors the paging message corresponding to the U2U Relay UE 3, the fourth message is sent to the next-hop node U2U Relay 1 in the second transmission direction, the fourth message including the paging message of the U2U Relay UE 3.

It is to be understood that acquiring of the SIB or the SI message requested by the next-hop node in the second transmission direction may mean that, for example, in a case that the next-hop node in the second transmission direction is a remote user equipment and the remote user equipment requests the SIB or the SI message through the first transmission direction, when the U2U Relay acquires the SIB or the SI message requested by the remote user equipment, the U2U Relay sends the fourth message to the next-hop node in the second transmission direction, the fourth message including the SIB or the SI message requested by the remote user equipment.

It is to be understood that acquiring of the SIB or the SI message requested by the remote user equipment served by the next-hop node in the second transmission direction may mean that, for example, in a case that the next-hop node in the second transmission direction is also a U2U Relay, e.g., a U2U Relay 1, the U2U Relay 1 serves a remote user equipment, and the remote user equipment requests the SIB or the SI message through the first transmission direction, when the U2U Relay acquires the SIB or the SI message requested by the remote user equipment, the U2U Relay sends the fourth message to the next-hop node U2U Relay 1 in the second transmission direction, the fourth message including the SIB or the SI message requested by the remote user equipment.

It is to be understood that the acquiring of the SIB or the SI message requested by the U2U Relay served by the next-hop node in the second transmission direction may mean that, for example, the next-hop node in the second transmission direction is a U2U Relay 1, and a U2U Relay UE 3 is served by the U2U Relay 1, that is, the U2U Relay UE 3 is both a user equipment and a relay, that is, the U2U Relay UE 3 is connected to the U2U Relay 1. If the U2U Relay UE 3 requests the SIB or the SI message, for example, through the first transmission direction, when the U2U Relay acquires the SIB or the SI message requested by the U2U Relay UE 3, the U2U Relay sends the fourth message to the next-hop node U2U Relay 1 in the second transmission direction, the fourth message including the SIB or the SI message requested by the U2U Relay UE 3.

It is to be understood that the updating of the system information and the acquiring of the updated system information may mean that, if the system information is updated and the U2U Relay acquires the updated system information, the U2U Relay sends the fourth message to the next-hop node in the second transmission direction.

As an optional example, the third message and the fourth message are UuMessageTransferSidelink messages or other messages.

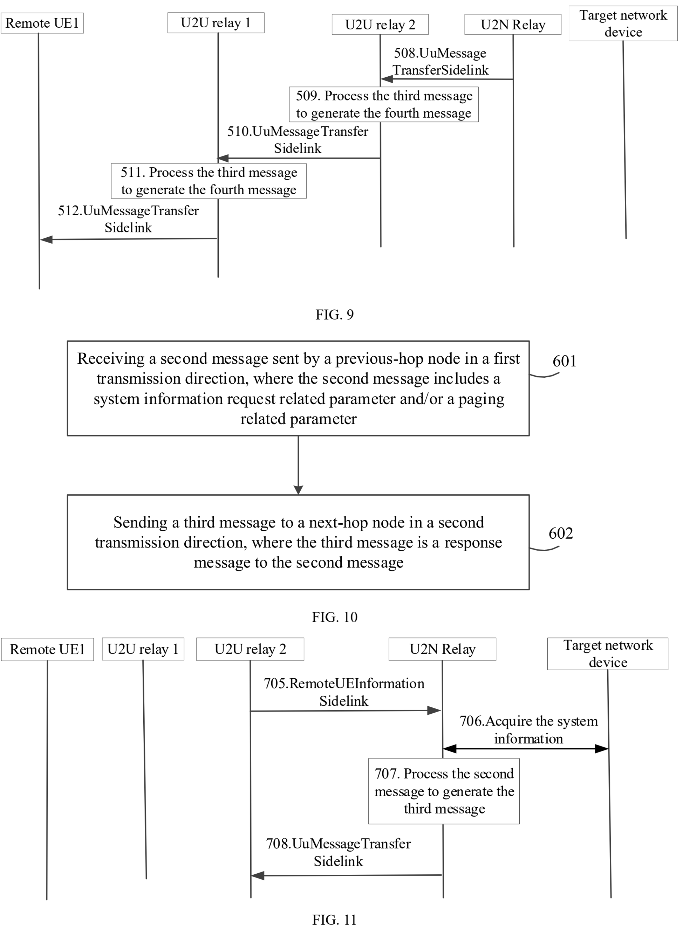

The second embodiment is further described below with a scenario including 2 U2U Relays and one U2N Relay, and as shown in FIG. 9, a remote user equipment (Remote UE 1) is connected to a U2U Relay 1, the U2U Relay 1 is connected to a U2U Relay 2, the U2U Relay 2 is connected to a U2N Relay, and the U2N Relay is connected to a network side device. It should be noted that the third message received by the U2U Relay 1 is the fourth message sent by the U2U Relay 2, that is, for the U2U Relay 2, the fourth message is sent to the next-hop node in the second transmission direction, and for the U2U Relay 1, the third message is received from the previous-hop node in the second transmission direction.

Step 508: sending the UuMessageTransferSidelink message to the next-hop U2U Relay 2 by the U2N Relay.

Step 509: processing the third message by the U2U Relay 2 to generate the fourth message.

The fourth message includes: the system information requested by the next-hop node of the U2U relay in the second transmission direction, where the system information requested by the next-hop node includes the SIB and/or the SI message; and
the paging message corresponding to the next-hop node of the U2U relay in the second transmission direction or the U2U relay and/or the remote user equipment connected to the next-hop node.

Step 510: sending the UuMessageTransferSidelink message (i.e., the fourth message) to the U2U Relay 1 by the U2U Relay 2.

That is, when determining that the third condition is satisfied, the U2U Relay 2 sends the fourth message to the next-hop node U2U Relay 1 in the second transmission direction;
where the third condition includes one of the following conditions or a combination thereof:
the paging message corresponding to the next-hop node in the second transmission direction is monitored;
the paging message corresponding to the remote user equipment served by the next-hop node in the second transmission direction is monitored;
the paging message corresponding to the U2U Relay served by the next-hop node in the second transmission direction is monitored;
the SIB or the SI message requested by the next-hop node in the second transmission direction is acquired;
an SIB or an SI message requested by the remote user equipment served by the next-hop node in the second transmission direction is acquired;
an SIB or an SI message requested by the U2U Relay served by the next-hop node in the second transmission direction is acquired; or
the system information is updated and the updated system information is acquired.

Step 511: processing the third message by the U2U Relay 1 to generate the fourth message.

The processing method for generating the fourth message by the U2U Relay 1 is the same as that of the U2U Relay 2, and is not repeated herein.

Step 513: sending the UuMessageTransferSidelink message (i.e., the fourth message) to the Remote UE 1 by the U2U Relay 1.

That is, when determining that the second condition is satisfied, the U2U Relay 1 sends the fourth message to the next-hop node Remote UE 1 in the second transmission direction.

After the above steps, the Remote UE 1 acquires the requested SIB or receives the paging message from a network side.

### Third Embodiment

Based on the same inventive concept, an embodiment of the present invention provides an information transmission method which is applied to a UE-to-UE relay (U2U Relay), as shown in FIG. 10, and includes:
step 601: receiving a second message sent by a previous-hop node in a first transmission direction, where the second message includes a system information request related parameter and/or a paging related parameter; and
step 602: sending a third message to a next-hop node in a second transmission direction, where the third message is a response message to the second message;
where the system information request related parameter includes requested system information block (SIB) indication information and/or system information (SI) message indication information;
the paging related parameter includes user equipment identification information of a remote user equipment (Remote UE) or user equipment identification information of a U2U Relay UE served by the U2N Relay; and
the previous-hop node includes a U2U Relay, and the next-hop node includes a U2U Relay.

As an optional example, sending the third message to the next-hop node in the second transmission direction includes:
in the case where a fourth condition is met, sending the third message to the next-hop node in the second transmission direction;
where the fourth condition includes one of the following conditions or a combination thereof:
   a paging message corresponding to the next-hop node in the second transmission direction is monitored;
   a paging message corresponding to a remote user equipment served by the next-hop node in the second transmission direction is monitored;
   a paging message corresponding to a U2U Relay served by the next-hop node in the second transmission direction is monitored;
   the SIB or the SI message requested by the next-hop node in the second transmission direction is acquired;
   an SIB or an SI message requested by the remote user equipment served by the next-hop node in the second transmission direction is acquired;
   an SIB or an SI message requested by the U2U Relay served by the next-hop node in the second transmission direction is acquired; or
   system information is updated and the updated system information is acquired.

It is to be understood that the monitoring by the U2N Relay of the paging message corresponding to the next-hop node in the second transmission direction may mean that, if the next-hop node in the second transmission direction is a remote user equipment, and the user equipment identification information is provided through the first transmission direction, when the U2N Relay monitors the paging message corresponding to the remote user equipment, the third message is sent to the next-hop node U2N Relay in the second transmission direction, the third message including the paging message of the remote user equipment.

It is to be understood that the monitoring by the U2N Relay of the paging message corresponding to the user equipment served by the next-hop node in the second transmission direction may mean that, if the next-hop node in the second transmission direction is a U2U Relay, for example, U2U Relay 2, the U2U Relay 2 serves one remote user equipment, and the user equipment identification information of the remote user equipment is provided through the first transmission direction, when the U2N Relay monitors the paging message corresponding to the remote user equipment, the third message is sent to the next-hop node U2U Relay 2 in the second transmission direction, the third message including the paging message of the remote user equipment.

It is to be understood that the monitoring by the U2N Relay of the paging message corresponding to the U2U Relay served by the next-hop node in the second transmission direction may mean that, for example, the next-hop node in the second transmission direction is a U2U Relay 1, and a U2U Relay UE 3 is served by the U2U Relay 1, that is, the U2U Relay UE 3 is both a user equipment and a relay, that is, the U2U Relay UE 3 is connected to the U2U Relay 1. If the U2U Relay UE 3 requests the paging message, for example, the user equipment identification information of the U2U Relay UE 3 is provided through the first transmission direction, when the U2N Relay monitors the paging message corresponding to the U2U Relay UE 3, the third message is sent to the next-hop node U2U Relay 1 in the second transmission direction, the third message including the paging message of the U2U Relay UE 3.

It is to be understood that acquiring by the U2N Relay of the SIB or the SI message requested by the next-hop node in the second transmission direction may mean that, if the next-hop node in the second transmission direction is a remote user equipment and requests the SIB or the SI message through the first transmission direction, when the U2N Relay acquires the SIB or the SI message requested by the remote user equipment, the U2U Relay sends the third message to the next-hop node in the second transmission direction, the third message including the SIB or the SI message requested by the remote user equipment.

It is to be understood that acquiring of the SIB or the SI message requested by the remote user equipment served by the next-hop node in the second transmission direction may mean that, if the next-hop node in the second transmission direction is a U2U Relay, for example, a U2U Relay 1, the U2U Relay 1 serves a remote user equipment, and the remote user equipment requests the SIB or the SI message through the first transmission direction, when the U2N Relay acquires the SIB or the SI message requested by the remote user equipment, the U2U Relay sends the third message to the next-hop node U2U Relay 1 in the second transmission direction, the third message including the SIB or the SI message requested by the remote user equipment.

It is to be understood that the acquiring by the U2N Relay of the SIB or the SI message requested by the U2U Relay served by the next-hop node in the second transmission direction may mean that, for example, the next-hop node in the second transmission direction is a U2U Relay 1, and a U2U Relay UE 3 is served by the U2U Relay 1, that is, the U2U Relay UE 3 is both a user equipment and a relay, that is, the U2U Relay UE 3 is connected to the U2U Relay 1. If the U2U Relay UE 3 requests the SIB or the SI message, for example, through the first transmission direction, when the U2N Relay acquires the SIB or the SI message requested by the U2U Relay UE 3, the U2U Relay sends the third message to the next-hop node U2U Relay 1 in the second transmission direction, the third message including the SIB or the SI message requested by the U2U Relay UE 3.

It is to be understood that the updating of the system information and the acquiring of the updated system information may mean that, if the system information is updated and the U2N Relay acquires the updated system information, the U2U Relay sends the third message to the next-hop node in the second transmission direction.

As an optional example, the third message is the response message to the second message, which includes one of the following cases or a combination thereof:
the response message includes a full or partial response to the SIB requested in the second message; or
the response message includes the paging message corresponding to the remote user equipment served by the next-hop node and/or the paging message corresponding to the U2U Relay served by the next-hop node.

As an optional example, after the second message is received from the previous-hop node in the first transmission direction, the method further includes:
storing the requested system information block (SIB) indication information or system information (SI) message indication information in the second message; and/or
storing the user equipment identification information of the remote user equipment (Remote UE) in the second message.

As an optional example, the third message is a UuMessageTransferSidelink message or other messages.

The third embodiment is further described below with a scenario including 2 U2U Relays and one U2N Relay, and as shown in FIG. 11, a remote user equipment (Remote UE 1) is connected to a U2U Relay 1, the U2U Relay 1 is connected to a U2U Relay 2, the U2U Relay 2 is connected to a U2N Relay, the U2N Relay is connected to a network side device, and a transmission process for the system information in this scenario is as follows.

Step 705: receiving the RemoteUEInformationSidelink message sent by the U2U Relay 2 by the U2N Relay.

For the U2N Relay, the second message (i.e., RemoteUEInformationSidelink message) sent by the previous-hop node in the first transmission direction is received, and the second message includes the system information request related parameter.

Step 706: acquiring the system information from the network side by the U2N Relay.

It should be noted that if the U2N Relay stores the system information corresponding to the system information request related parameter and the system information is valid, the step 706 may be omitted. Otherwise, the U2N Relay may follow the existing Uu interface on-demand SI signaling process to obtain the required system information from the network device.

Step 707: processing the second message by the U2N Relay to generate the third message.

Step 708: sending the UuMessageTransferSidelink message to the next-hop node U2U Relay 2 by the U2N Relay.

The U2N Relay sends the third message to the next-hop node in the second transmission direction when the fourth condition is met, the fourth condition including one of the following conditions or a combination thereof:
the SIB or the SI message requested by the next-hop node in the second transmission direction is acquired;
an SIB or an SI message requested by the remote user equipment served by the next-hop node in the second transmission direction is acquired;
an SIB or an SI message requested by the U2U Relay served by the next-hop node in the second transmission direction is acquired; or
system information is updated and the updated system information is acquired.

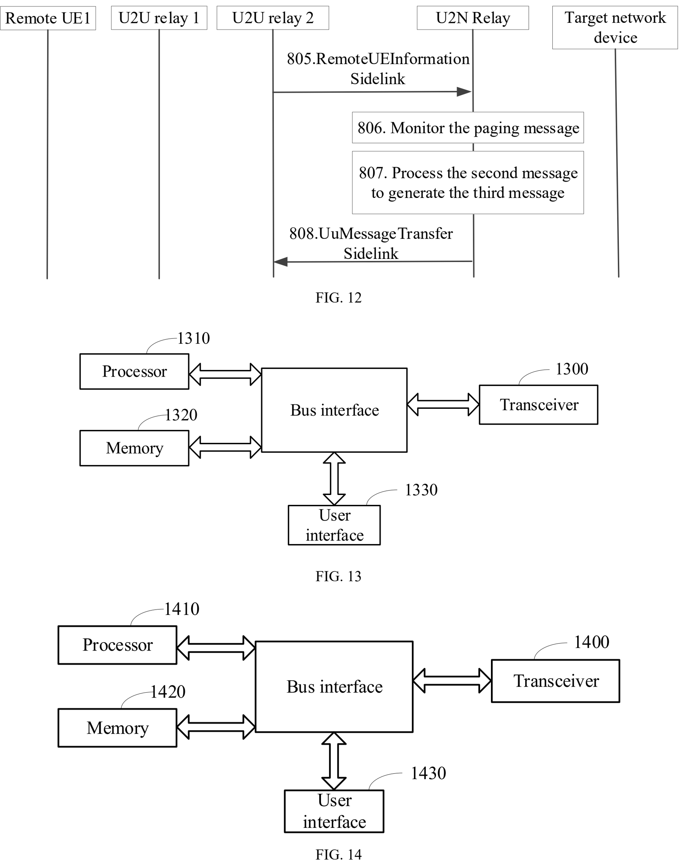

The third embodiment is further described below with a scenario including 2 U2U Relays and one U2N Relay, and as shown in FIG. 12, a remote user equipment (Remote UE 1) is connected to a U2U Relay 1, the U2U Relay 1 is connected to a U2U Relay 2, the U2U Relay 2 is connected to a U2N Relay, the U2N Relay is connected to a network side device, and a transmission process for the paging message in this scenario is as follows.

Step 805: receiving the RemoteUEInformationSidelink message sent by the U2U Relay 2 by the U2N Relay.

For the U2N Relay, the second message (i.e., RemoteUEInformationSidelink message) sent by the previous-hop node in the first transmission direction is received, and the second message includes the paging related parameter.

Step 806: monitoring a paging message by the U2N Relay.

In this step, the U2N Relay determines the paging messages of the user equipment to be monitored according to the received second message, determines a position of a PO (Paging Occasion) to be monitored according to a user equipment identification for paging monitoring carried in the second message, and performs Paging monitoring at the position.

Step 807: processing the second message by the U2N Relay to generate the third message.

In this step, the second message may further include the paging message monitored by the U2N Relay.

The third message is a response message to the second message.

The response message includes the paging message corresponding to the remote user equipment served by the next-hop node and/or the paging message corresponding to the U2U Relay served by the next-hop node, that is, includes the paging message of the Remote UE 1 and/or the paging message corresponding to the U2U Relay 1.

Step 808: sending the UuMessageTransferSidelink message to the next-hop node in the second transmission direction by the U2N Relay.

In this step, in the case that the third condition is satisfied, the U2N Relay sends the third message to the next-hop node U2U Relay 2 in the second transmission direction.

### Fourth Embodiment

Based on the same inventive concept, as shown in FIG. 13 which is a schematic structural diagram of a UE-to-UE relay (U2U Relay) according to an embodiment of the present application, and the U2U Relay includes:
a memory 1320 for storing a computer program; a transceiver 1300 for transmitting and receiving data under control of a processor 1310; and the processor 1310 for reading the computer program in the memory 1320 and performing the following operations:
receiving a first message sent by a previous-hop node in a first transmission direction, where the first message includes a system information request related parameter and/or a paging related parameter; and
sending a second message to a next-hop node in the first transmission direction, where the second message is generated on the basis of at least one first message;
where the system information request related parameter includes requested system information block (SIB) indication information and/or system information (SI) message indication information;
the paging related parameter includes user equipment identification information of the remote user equipment (Remote UE);
the previous-hop node includes a remote user equipment or U2U Relay and the next-hop node includes a U2U Relay or a UE-to-network relay (U2N Relay).

In FIG. 13, a bus architecture may include any number of interconnected buses and bridges, which specifically link various circuits of one or more processors represented by the processor 1310 and memories represented by the memory 1320 together. The bus architecture may also link together various other circuits such as peripherals, voltage regulators, and power management circuits, which are well known in the art, and therefore, will not be further described herein. A bus interface provides an interface. The transceiver 1300 may be a number of elements, that is, include a transmitter and a receiver, and provide a unit for communication with various other apparatuses over transmission media including wireless channels, wired channels, fiber optic cables, or the like. The processor 1310 is responsible for managing the bus architecture and general processing, and the memory 1320 may store data used when the processor 1310 performs operations.

The processor 1310 may be a Central Processing Unit (CPU), an Application Specific Integrated Circuit (ASIC), a Field-Programmable Gate Array (FPGA), or a Complex Programmable Logic Device (CPLD), and may also adopt a multi-core architecture.

As an optional example, sending the second message to the next-hop node in the first transmission direction includes at least one of the following steps:
when the first message includes the system information request related parameter, sending the second message to the next-hop node in the first transmission direction;
when the first message includes the paging related parameter, sending the second message to the next-hop node in the first transmission direction;
when the first message includes the system information request related parameter and a first condition is met, sending the second message to the next-hop node in the first transmission direction; or
when the first message includes the paging related parameter and a second condition is met, sending the second message to the next-hop node in the first transmission direction.

As an optional example, the first condition includes one of the following conditions or a combination thereof:
an SIB indicated by the SIB indication information or an SI message indicated by the SI message indication information is not stored;
the SIB indicated by the SIB indication information or the SI message indicated by the SI message indication information is stored and the SIB or the SI message is invalid;
a time interval between a moment of receiving the first message containing the system information request related parameter and a moment of receiving the first message containing the system information request related parameter last time is greater than a first preset threshold T1; or
the content of the system information request related parameter contained in the first message is different from the contents of the system information request related parameters contained in the first messages received last N times, where N is an integer greater than or equal to 1.

As an optional example, the second condition includes one of the following conditions or a combination thereof:
a time interval between a moment of receiving the first message containing the paging related parameter and a moment of receiving the first message containing the paging related parameter last time is greater than a first preset threshold T1; or
a content of the paging related parameter contained in the first message is different from contents of the paging related parameters contained in the first messages received last M times, where M is an integer greater than or equal to 1.

As an optional example, the generation of the second message on the basis of the at least one first message includes one of the following steps:
directly taking the first message as the second message;
generating the second message according to at least two first messages received from one or more previous-hop nodes in the first transmission direction; or
generating the second message according to at least one first message received from one or more previous-hop nodes in the first transmission direction and the system information request related parameter and/or the paging related parameter corresponding to the U2U Relay.

As an optional example, generating the second message according to the at least two first messages received from the one or more previous-hop nodes in the first transmission direction includes:
the second message including system information request related parameter and/or paging related parameter,
merging the system information request related parameters contained in the at least two first messages, and deleting repeated parts to obtain the system information request related parameter in the second message; and
merging the paging related parameters in the at least two first messages, and deleting repeated parts to obtain the paging related parameter in the second message.

As an optional example, generating the second message according to the at least one first message received from the one or more previous-hop nodes in the first transmission direction and the system information request related parameter and/or the paging related parameter corresponding to the U2U Relay includes:
the second message including system information request related parameter and/or paging related parameter,
merging the system information request related parameter contained in the at least one first message with the system information request related parameter corresponding to the U2U Relay, and deleting repeated parts to obtain the system information request related parameter in the second message; and
merging the paging related parameter in the at least one first message with the paging related parameter corresponding to the U2U Relay, and deleting repeated parts to obtain the paging related parameter in the second message.

As an optional example, the first message and the second message are RemoteUEInformationSidelink messages.

It should be noted herein that the U2U Relay according to the embodiment of the present application can implement all the method steps implemented in the embodiment of the information transmission method applied to a U2U Relay, and can achieve the same technical effects, and the same parts and beneficial effects of this embodiment as those of the method embodiment are not repeated herein.

### Fifth Embodiment

Based on the same inventive concept, as shown in FIG. 14 which is a schematic structural diagram of a UE-to-UE relay (U2U Relay) according to an embodiment of the present application, and the U2U Relay includes:
a memory 1420 for storing a computer program; a transceiver 1400 for transmitting and receiving data under control of a processor 1410; and the processor 1410 for reading the computer program in the memory 1420 and performing the following operations:
receiving a third message sent by a previous-hop node or a network device in a second transmission direction, where the third message includes system information and/or a paging message; and
sending a fourth message to a next-hop node in the second transmission direction, where the fourth message is generated according to at least one third message;
where the system information at least includes a system information block (SIB) or a system information (SI) message;
the previous-hop node includes a UE-to-network relay (U2N Relay) or U2U Relay, and the next-hop node includes a U2U Relay or Remote UE.

In FIG. 14, a bus architecture may include any number of interconnected buses and bridges, which specifically link various circuits of one or more processors represented by the processor 1410 and memories represented by the memory 1420 together. The bus architecture may also link together various other circuits such as peripherals, voltage regulators, and power management circuits, which are well known in the art, and therefore, will not be further described herein. A bus interface provides an interface. The transceiver 1400 may be a number of elements, that is, include a transmitter and a receiver, and provide a unit for communication with various other apparatuses over transmission media including wireless channels, wired channels, fiber optic cables, or the like. The processor 1410 is responsible for managing the bus architecture and general processing, and the memory 1420 may store data used when the processor 1410 performs operations.

The processor 1410 may be a Central Processing Unit (CPU), an Application Specific Integrated Circuit (ASIC), a Field-Programmable Gate Array (FPGA), or a Complex Programmable Logic Device (CPLD), and may also adopt a multi-core architecture.

As an optional example, the processor 1410 is further configured to read the computer program in the memory 1420 and perform the following operations:
storing all or part of a content contained in the third message, which includes at least one of the following steps:
storing the SIB or the SI message or the paging message contained in the third message;
when the SIB contained in the third message is not identical to an SIB currently stored by a user equipment, storing a different SIB;
when the SI message contained in the third message is not identical to an SI message currently stored by the user equipment, storing a different SI message; or
when a time interval between a third message receiving moment and a last third message receiving moment is greater than a second preset threshold T2, storing the SIB or the SI message or the paging message contained in the third message.

As an optional example, the fourth message includes at least one of:
system information requested by a next-hop node of the U2U relay in the second transmission direction, where the system information requested by the next-hop node includes an SIB or an SI message; or
the paging message corresponding to the next-hop node of the U2U relay in the second transmission direction or the U2U relay and/or the remote user equipment connected to the next-hop node.

As an optional example, sending the fourth message to the next-hop node in the second transmission direction includes:
in the case where a third condition is met, sending the fourth message to the next-hop node in the second transmission direction;
where the third condition includes one of the following conditions or a combination thereof:
   the paging message corresponding to the next-hop node in the second transmission direction is monitored;
   the paging message corresponding to the remote user equipment served by the next-hop node in the second transmission direction is monitored;
   the paging message corresponding to the U2U Relay served by the next-hop node in the second transmission direction is monitored;
   the SIB or the SI message requested by the next-hop node in the second transmission direction is acquired;
   an SIB or an SI message requested by the remote user equipment served by the next-hop node in the second transmission direction is acquired;
   an SIB or an SI message requested by the U2U Relay served by the next-hop node in the second transmission direction is acquired; or
   the system information is updated and the updated system information is acquired.

As an optional example, the third message and the fourth message are UuMessageTransferSidelink messages.

It should be noted herein that the U2U Relay according to the embodiment of the present application can implement all the method steps implemented in the embodiment of the information transmission method applied to a U2U Relay, and can achieve the same technical effects, and the same parts and beneficial effects of this embodiment as those of the method embodiment are not repeated herein.

### Sixth Embodiment

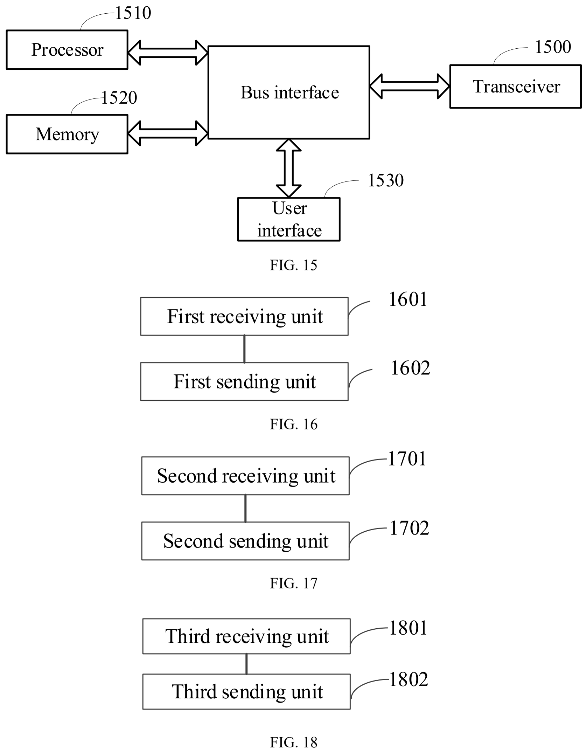

Based on the same inventive concept, as shown in FIG. 15 which is a schematic structural diagram of a UE-to-network relay (U2N Relay) according to an embodiment of the present application, and the U2N Relay includes:
a memory 1520 for storing a computer program; a transceiver 1500 for transmitting and receiving data under control of a processor 1510; and the processor 1510 for reading the computer program in the memory 1520 and performing the following operations:
receiving a second message sent by a previous-hop node in a first transmission direction, where the second message includes a system information request related parameter and/or a paging related parameter; and
sending a third message to a next-hop node in a second transmission direction, where the third message is a response message to the second message;
where the system information request related parameter includes requested system information block (SIB) indication information and/or system information (SI) message indication information;
the paging related parameter includes user equipment identification information of a remote user equipment (Remote UE) or user equipment identification information of a U2U Relay UE served by the U2N Relay;
the previous-hop node includes a U2U Relay, and the next-hop node includes a U2U Relay.

In FIG. 15, a bus architecture may include any number of interconnected buses and bridges, which specifically link various circuits of one or more processors represented by the processor 1510 and memories represented by the memory 1520 together. The bus architecture may also link together various other circuits such as peripherals, voltage regulators, and power management circuits, which are well known in the art, and therefore, will not be further described herein. A bus interface provides an interface. The transceiver 1500 may be a number of elements, that is, include a transmitter and a receiver, and provide a unit for communication with various other apparatuses over transmission media including wireless channels, wired channels, fiber optic cables, or the like. The processor 1510 is responsible for managing the bus architecture and general processing, and the memory 1520 may store data used when the processor 1510 performs operations.

The processor 1510 may be a Central Processing Unit (CPU), an Application Specific Integrated Circuit (ASIC), a Field-Programmable Gate Array (FPGA), or a Complex Programmable Logic Device (CPLD), and may also adopt a multi-core architecture.

As an optional example, the processor 1510 is further configured to read the computer program in the memory 1520 and perform the following operations:
in the case where a fourth condition is met, sending the third message to the next-hop node in the second transmission direction;
where the fourth condition includes one of the following conditions or a combination thereof:
   a paging message corresponding to the next-hop node in the second transmission direction is monitored;
   a paging message corresponding to a remote user equipment served by the next-hop node in the second transmission direction is monitored;
   a paging message corresponding to a U2U Relay served by the next-hop node in the second transmission direction is monitored;
   the SIB or the SI message requested by the next-hop node in the second transmission direction is acquired;
   an SIB or an SI message requested by the remote user equipment served by the next-hop node in the second transmission direction is acquired;
   an SIB or an SI message requested by the U2U Relay served by the next-hop node in the second transmission direction is acquired; or
   system information is updated and the updated system information is acquired.

As an optional example, the third message is the response message to the second message, which includes one of the following cases or a combination thereof:
the response message includes a full or partial response to the SIB requested in the second message; or
the response message includes the paging message corresponding to the remote user equipment served by the next-hop node and/or the paging message corresponding to the U2U Relay served by the next-hop node and/or the paging message corresponding to the U2U Relay served by the next-hop node.

As an optional example, after the second message is received from the previous-hop node in the first transmission direction, the method further includes:
storing the requested system information block (SIB) indication information or system information (SI) message indication information in the second message; and/or
storing the user equipment identification information of the remote user equipment (Remote UE) in the second message.

As an optional example, the third message is a UuMessageTransferSidelink message.

It should be noted herein that the U2N Relay according to the embodiment of the present application can implement all the method steps implemented in the embodiment of the information transmission method applied to a U2N Relay, and can achieve the same technical effects, and the same parts and beneficial effects of this embodiment as those of the method embodiment are not repeated herein.

### Seventh Embodiment

Based on the same inventive concept, an embodiment of the present application further provides a UE-to-UE relay (U2U Relay), and as shown in FIG. 16, the U2U Relay may include:
a first receiving unit 1601 configured to receive a first message sent by a previous-hop node in a first transmission direction, where the first message includes a system information request related parameter and/or a paging related parameter; and
a first sending unit 1602 configured to send a second message to a next-hop node in the first transmission direction, where the second message is generated on the basis of at least one first message;
where the system information request related parameter includes requested system information block (SIB) indication information and/or system information (SI) message indication information;
the paging related parameter includes user equipment identification information of the remote user equipment (Remote UE);
the previous-hop node includes a remote user equipment or U2U Relay and the next-hop node includes a U2U Relay or a UE-to-network relay (U2N Relay).

As an optional example, the first sending unit 1602 is further configured to send the second message to the next-hop node in the first transmission direction, which includes at least one of the following operations:
when the first message includes the system information request related parameter, sending the second message to the next-hop node in the first transmission direction;
when the first message includes the paging related parameter, sending the second message to the next-hop node in the first transmission direction;
when the first message includes the system information request related parameter, sending the second message to the next-hop node in the first transmission direction;
when the first message includes the paging related parameter, sending the second message to the next-hop node in the first transmission direction;
when the first message includes the system information request related parameter and a first condition is met, sending the second message to the next-hop node in the first transmission direction; or
when the first message includes the paging related parameter and a second condition is met, sending the second message to the next-hop node in the first transmission direction.

As an optional example, the first condition includes one of the following conditions or a combination thereof:
an SIB indicated by the SIB indication information or an SI message indicated by the SI message indication information is not stored;
the SIB indicated by the SIB indication information or the SI message indicated by the SI message indication information is stored and the SIB or the SI message is invalid;
a time interval between a moment of receiving the first message containing the system information request related parameter and a moment of receiving the first message containing the system information request related parameter last time is greater than a first preset threshold T1; or
the content of the system information request related parameter contained in the first message is different from the contents of the system information request related parameters contained in the first messages received last N times, where N is an integer greater than or equal to 1.

As an optional example, the second condition includes one of the following conditions or a combination thereof:
a time interval between a moment of receiving the first message containing the paging related parameter and a moment of receiving the first message containing the paging related parameter last time is greater than a first preset threshold T1; or
a content of the paging related parameter contained in the first message is different from contents of the paging related parameters contained in the first messages received last M times, where M is an integer greater than or equal to 1.

As an optional example, the first sending unit 1602 is further configured to generate the second message on the basis of the at least one first message, which includes one of the following operations:
directly taking the first message as the second message;
generating the second message according to at least two first messages received from one or more previous-hop nodes in the first transmission direction; or
generating the second message according to at least one first message received from one or more previous-hop nodes in the first transmission direction and the system information request related parameter and/or the paging related parameter corresponding to the U2U Relay.

As an optional example, generating the second message according to the at least two first messages received from the one or more previous-hop nodes in the first transmission direction includes:
the second message including system information request related parameter and/or paging related parameter,
merging the system information request related parameters contained in the at least two first messages, and deleting repeated parts to obtain the system information request related parameter in the second message; and
merging the paging related parameters in the at least two first messages, and deleting repeated parts to obtain the paging related parameter in the second message.

As an optional example, generating the second message according to the at least one first message received from the one or more previous-hop nodes in the first transmission direction and the system information request related parameter and/or the paging related parameter corresponding to the U2U Relay includes:
the second message including system information request related parameter and/or paging related parameter,
merging the system information request related parameter contained in the at least one first message with the system information request related parameter corresponding to the U2U Relay, and deleting repeated parts to obtain the system information request related parameter in the second message; and
merging the paging related parameter in the at least one first message with the paging related parameter corresponding to the U2U Relay, and deleting repeated parts to obtain the paging related parameter in the second message.

As an optional example, the first message and the second message are RemoteUEInformationSidelink messages.

It should be noted herein that the UE-to-UE relay (U2U Relay) according to the embodiment of the present application can implement all the method steps implemented in the embodiment of the method with the U2U Relay as the execution subject, and can achieve the same technical effects, and the same parts and beneficial effects of this embodiment as those of the method embodiment are not repeated herein.

### Eighth Embodiment

Based on the same inventive concept, an embodiment of the present application further provides a UE-to-UE relay (U2U Relay), and as shown in FIG. 17, the U2U Relay may include:
a second receiving unit 1701 configured to receive a third message sent by a previous-hop node or a network device in a second transmission direction, where the third message includes a system information related parameter and/or a paging message; and
a second sending unit 1702 configured to send a fourth message to a next-hop node in the second transmission direction, where the fourth message is generated according to at least one third message;
where the system information related parameter at least includes a system information block (SIB) or a system information (SI) message;
the previous-hop node includes a UE-to-network relay (U2N Relay) or U2U Relay, and the next-hop node includes a U2U Relay or Remote UE.

As an optional example, the U2U Relay according to this embodiment further includes a second storage unit 1703 configured to:
store all or part of a content contained in the third message, which includes at least one of the following steps:
storing the SIB or the SI message or the paging message contained in the third message;
when the SIB contained in the third message is not identical to an SIB currently stored by a user equipment, storing a different SIB;
when the SI message contained in the third message is not identical to an SI message currently stored by the user equipment, storing a different SI message; or
when a time interval between a third message receiving moment and a last third message receiving moment is greater than a second preset threshold T2, storing the SIB or the SI message or the paging message contained in the third message.

As an optional example, the fourth message includes at least one of:
system information requested by a next-hop node of the U2U relay in the second transmission direction, where the system information requested by the next-hop node includes an SIB or an SI message; or
the paging message corresponding to the next-hop node of the U2U relay in the second transmission direction or the U2U relay and/or the remote user equipment connected to the next-hop node.

As an optional example, sending the fourth message to the next-hop node in the second transmission direction includes:
in the case where a third condition is met, sending the fourth message to the next-hop node in the second transmission direction;
where the third condition includes one of the following conditions or a combination thereof:
   the paging message corresponding to the next-hop node in the second transmission direction is monitored;
   the paging message corresponding to the remote user equipment served by the next-hop node in the second transmission direction is monitored;
   the paging message corresponding to the U2U Relay served by the next-hop node in the second transmission direction is monitored;
   the SIB or the SI message requested by the next-hop node in the second transmission direction is acquired;
   an SIB or an SI message requested by the remote user equipment served by the next-hop node in the second transmission direction is acquired;
   an SIB or an SI message requested by the U2U Relay served by the next-hop node in the second transmission direction is acquired; or
   the system information is updated and the updated system information is acquired.

As an optional example, the third message and the fourth message are UuMessageTransferSidelink messages.

It should be noted herein that the UE-to-UE relay (U2U Relay) according to the embodiment of the present application can implement all the method steps implemented in the embodiment of the method with the U2U Relay as the execution subject, and can achieve the same technical effects, and the same parts and beneficial effects of this embodiment as those of the method embodiment are not repeated herein.

### Ninth Embodiment

Based on the same inventive concept, an embodiment of the present application further provides a UE-to-network relay (U2N Relay), and as shown in FIG. 18, the U2N Relay may include:
a third receiving unit 1801 configured to receive a second message sent by a previous-hop node in a first transmission direction, where the second message includes a system information request related parameter and/or a paging related parameter; and
a third sending unit 1802 configured to send a third message to a next-hop node in a second transmission direction, where the third message is a response message to the second message;
where the system information request related parameter includes requested system information block (SIB) indication information and/or system information (SI) message indication information;
the paging related parameter includes user equipment identification information of the remote user equipment (Remote UE);
the previous-hop node includes a U2U Relay, and the next-hop node includes a U2U Relay.

As an optional example, the third sending unit 1802 is further configured to:
in the case where a fourth condition is met, send the third message to the next-hop node in the second transmission direction;
where the fourth condition includes one of the following conditions or a combination thereof:
   a paging message corresponding to the next-hop node in the second transmission direction is monitored;
   a paging message corresponding to a remote user equipment served by the next-hop node in the second transmission direction is monitored;
   a paging message corresponding to a U2U Relay served by the next-hop node in the second transmission direction is monitored;
   the SIB or the SI message requested by the next-hop node in the second transmission direction is acquired;
   an SIB or an SI message requested by the remote user equipment served by the next-hop node in the second transmission direction is acquired;
   an SIB or an SI message requested by the U2U Relay served by the next-hop node in the second transmission direction is acquired; or
   system information is updated and the updated system information is acquired.

As an optional example, the third message is the response message to the second message, which includes one of the following cases or a combination thereof:
the response message includes a full or partial response to the SIB requested in the second message; or
the response message includes the paging message corresponding to the remote user equipment served by the next-hop node and/or the paging message corresponding to the U2U Relay served by the next-hop node and/or the paging message corresponding to the U2U Relay served by the next-hop node.

As an optional example, the third receiving unit 1801 is further configured to, after receiving the second message from the previous-hop node in the first transmission direction:
store the requested system information block (SIB) indication information or system information (SI) message indication information in the second message; and/or
store the user equipment identification information of the remote user equipment (Remote UE) in the second message.

As an optional example, the third message is a UuMessageTransferSidelink message.

It should be noted that the division of the units in the embodiment of the present application is schematic, and is only logical function division, and there may be another division manner in actual implementation. In addition, functional units in the embodiments of the present application may be integrated into one processing unit, or each of the units may exist alone physically, or two or more units are integrated into one unit. The integrated unit can be realized in the form of hardware or a software functional unit.

When implemented in the form of software functional units and sold or used as independent products, the integrated units can be stored in a processor-readable storage medium. Based on such an understanding, the technical solutions of the present application essentially, or the part contributing to the prior art, or all or a part of the technical solutions may be implemented in the form of a software product. The computer software product is stored in a storage medium and includes several instructions for instructing a computer device (which may be a personal computer, a server, or a network device) or a processor to perform all or a part of steps of the method described in the embodiment of the present application. The foregoing storage medium includes: any medium that may store program codes such as a universal serial bus (USB) flash disk, a removable hard disk, a read-only memory (ROM), a random access memory (RAM), a magnetic disk, or an optical disk.

Based on the same inventive concept, an embodiment of the present application further provides a processor-readable storage medium storing a computer program for causing a processor to perform the information transmission method according to each of the above embodiments.

The processor-readable storage medium may be any available medium or data storage device that can be accessed by a processor, including but not limited to a magnetic memory (e.g., a floppy disk, a hard disk, magnetic tape, a magneto-optical disk (MO), etc.), an optical memory (e.g., a CD, a DVD, a BD, an HVD, etc.), and a semiconductor memory (e.g., an ROM, an EPROM, an EEPROM, a non-transitory memory (NAND FLASH), and a solid state disk (SSDs)), etc.

Those skilled in the art may understand that the present application may be embodied by a method, a system or a computer program product. Therefore, the present application may be embodied completely by hardware, software or by a combination of software and hardware. In addition, the present application may be embodied by a computer program product implemented in one or more computer available storage media including computer available program codes (including but not limited to a disk memory, an optical memory, etc.).

The present application is described in conjunction with the flow chart and/or block diagram of the method, device (system) and computer program product according to the embodiments of the present application. It should be understood that each flow and/or block of the flow chart and/or block diagram or a combination of each flow and/or block of the flow chart and/or block diagram may be implemented by the computer executable instructions. These computer executable instructions may be provided to a general purpose computer, a dedicated computer, an embedded processor or the processors of other programmable data processing devices to make a machine, so as to make the instructions performed by the processor of the computer or other programmable data processing devices produce an apparatus for implementing the functions prescribed in one or more flows in the flow chart and/or one or more blocks in the block diagram.

These processor executable instructions may further be stored in a processor readable memory capable of leading the computer or other programmable data processing devices to work in a specific manner, so that the instructions stored in the processor readable memory may produce an article of manufacture including an instruction apparatus, where the instruction apparatus implements the functions prescribed in one or more flows in the flow chart and/or one or more blocks in the block diagram.

These processor executable instructions may further be loaded into a computer or other programmable data processing devices, so that a series of operation steps may be performed in the computer or other programmable devices, so as to produce computer-implemented processing, so that the instructions performed in the computer or other programmable devices may provide the steps for implementing the functions prescribed in one or more flows in the flow chart and/or one or more blocks in the block diagram.

Obviously, those skilled in the art can make various modifications and variations to the present application without departing from the spirit and scope of the present application. Thus, if these modifications and variations of the present application fall within the scope of the claims of the present application and equivalents thereof, the present application also intends to include these modifications and variations.

## Claims

1. An information transmission method applied to a UE-to-UE relay (U2U Relay), comprising:
receiving a first message sent by a previous-hop node in a first transmission direction, wherein the first message comprises a system information request related parameter and/or a paging related parameter; and
sending a second message to a next-hop node in the first transmission direction, wherein the second message is generated on the basis of at least one first message;
wherein the system information request related parameter comprises requested system information block (SIB) indication information and/or system information (SI) message indication information;
the paging related parameter comprises user equipment identification information of a remote user equipment (Remote UE);
the previous-hop node comprises the remote user equipment or U2U Relay, and the next-hop node comprises a U2U Relay or a UE-to-network relay (U2N Relay).

2. The method according to claim 1, wherein sending the second message to the next-hop node in the first transmission direction comprises at least one of the following:
when the first message comprises the system information request related parameter, sending the second message to the next-hop node in the first transmission direction;
when the first message comprises the paging related parameter, sending the second message to the next-hop node in the first transmission direction;
when the first message comprises the system information request related parameter and a first condition is met, sending the second message to the next-hop node in the first transmission direction; or
when the first message comprises the paging related parameter and a second condition is met, sending the second message to the next-hop node in the first transmission direction.

3. The method according to claim 2, wherein the first condition comprises one of the following conditions or a combination thereof:
an SIB indicated by the SIB indication information or an SI message indicated by the SI message indication information is not stored;
the SIB indicated by the SIB indication information or the SI message indicated by the SI message indication information is stored and the SIB or the SI message is invalid;
a time interval between a moment of receiving the first message containing the system information request related parameter and a moment of receiving the first message containing the system information request related parameter last time is greater than a first preset threshold T1; or
a content of the system information request related parameter contained in the first message is different from contents of the system information request related parameters contained in the first messages received last N times, wherein N is an integer greater than or equal to 1.

4. The method according to claim 2, wherein the second condition comprises one of the following conditions or a combination thereof:
a time interval between a moment of receiving the first message containing the paging related parameter and a moment of receiving the first message containing the paging related parameter last time is greater than a first preset threshold T1; or
a content of the paging related parameter contained in the first message is different from contents of the paging related parameters contained in the first messages received last M times, wherein M is an integer greater than or equal to 1.

5. The method according to claim 1, wherein the generation of the second message on the basis of the at least one first message comprises one of the following:
directly taking the first message as the second message;
generating the second message according to at least two first messages received from one or more previous-hop nodes in the first transmission direction; or
generating the second message according to at least one first message received from one or more previous-hop nodes in the first transmission direction and the system information request related parameter and/or the paging related parameter corresponding to the U2U Relay.

6. The method according to claim 5, wherein generating the second message according to the at least two first messages received from the one or more previous-hop nodes in the first transmission direction comprises:
the second message comprising system information request related parameter and/or paging related parameter,
merging the system information request related parameters contained in the at least two first messages, and deleting repeated parts to obtain the system information request related parameter in the second message; and
merging the paging related parameters in the at least two first messages, and deleting repeated parts to obtain the paging related parameter in the second message.

7. The method according to claim 5, wherein generating the second message according to the at least one first message received from the one or more previous-hop nodes in the first transmission direction and the system information request related parameter and/or the paging related parameter corresponding to the U2U Relay comprises:
the second message comprising system information request related parameter and/or paging related parameter,
merging the system information request related parameter contained in the at least one first message with the system information request related parameter corresponding to the U2U Relay, and deleting repeated parts to obtain the system information request related parameter in the second message; and
merging the paging related parameter in the at least one first message with the paging related parameter corresponding to the U2U Relay, and deleting repeated parts to obtain the paging related parameter in the second message.

8. The method according to any one of claims 1 to 7, wherein the first message and the second message are RemoteUEInformationSidelink messages.

9. An information transmission method applied to a UE-to-UE relay (U2U Relay), comprising:
receiving a third message sent by a previous-hop node or a network device in a second transmission direction, wherein the third message comprises system information and/or a paging message; and
sending a fourth message to a next-hop node in the second transmission direction, wherein the fourth message is generated according to at least one third message;
wherein the system information at least comprises a system information block (SIB) or a system information (SI) message;
the previous-hop node comprises a UE-to-network relay (U2N Relay) or U2U Relay, and the next-hop node comprises a U2U Relay or Remote UE.

10. The method according to claim 9, further comprising:
storing all or part of a content contained in the third message, and all or part of the content contained in the third message comprises at least one of the following:
storing the SIB or the SI message or the paging message contained in the third message;
when the SIB contained in the third message is not identical to an SIB currently stored by a user equipment, storing a different SIB;
when the SI message contained in the third message is not identical to an SI message currently stored by the user equipment, storing a different SI message; or
when a time interval between a third message receiving moment and a last third message receiving moment is greater than a second preset threshold T2, storing the SIB or the SI message or the paging message contained in the third message.

11. The method according to claim 9, wherein the fourth message comprises at least one of:
system information requested by a next-hop node of the U2U relay in the second transmission direction, wherein the system information requested by the next-hop node comprises an SIB and/or an SI message; or
the paging message corresponding to the next-hop node of the U2U relay in the second transmission direction or the U2U relay and/or the remote user equipment connected to the next-hop node.

12. The method according to claim 9, wherein sending the fourth message to the next-hop node in the second transmission direction comprises:
in a case where a third condition is met, sending the fourth message to the next-hop node in the second transmission direction;
wherein the third condition comprises one of the following conditions or a combination thereof:
the paging message corresponding to the next-hop node in the second transmission direction is monitored;
the paging message corresponding to the remote user equipment served by the next-hop node in the second transmission direction is monitored;
the paging message corresponding to the U2U Relay served by the next-hop node in the second transmission direction is monitored;
the SIB or the SI message requested by the next-hop node in the second transmission direction is acquired;
an SIB or an SI message requested by the remote user equipment served by the next-hop node in the second transmission direction is acquired;
an SIB or an SI message requested by the U2U Relay served by the next-hop node in the second transmission direction is acquired; or
the system information is updated and the updated system information is acquired.

13. The method according to any one of claims 9 to 12, wherein the third message and the fourth message are UuMessageTransferSidelink messages.

14. An information transmission method applied to a user equipment-to-network relay (U2N Relay), comprising:
receiving a second message sent by a previous-hop node in a first transmission direction, wherein the second message comprises a system information request related parameter and/or a paging related parameter; and
sending a third message to a next-hop node in a second transmission direction, wherein the third message is a response message to the second message;
wherein the system information request related parameter comprises requested system information block (SIB) indication information or system information (SI) message indication information;
the paging related parameter comprises user equipment identification information of a remote user equipment or user equipment identification information of a U2U Relay UE served by the U2N Relay;
the previous-hop node comprises a U2U Relay, and the next-hop node comprises a U2U Relay.

15. The method according to claim 14, wherein sending the third message to the next-hop node in the second transmission direction comprises:
in a case where a fourth condition is met, sending the third message to the next-hop node in the second transmission direction;
wherein the fourth condition comprises one of the following conditions or a combination thereof:
a paging message corresponding to the next-hop node in the second transmission direction is monitored;
a paging message corresponding to a remote user equipment served by the next-hop node in the second transmission direction is monitored;
a paging message corresponding to a U2U Relay served by the next-hop node in the second transmission direction is monitored;
the SIB or the SI message requested by the next-hop node in the second transmission direction is acquired;
an SIB or an SI message requested by the remote user equipment served by the next-hop node in the second transmission direction is acquired;
an SIB or an SI message requested by the U2U Relay served by the next-hop node in the second transmission direction is acquired; or
system information is updated and the updated system information is acquired.

16. The method according to claim 14, wherein the third message is the response message to the second message, which comprises one of the following cases or a combination thereof:
the response message comprises a full or partial response to the SIB requested in the second message; or
the response message comprises the paging message corresponding to the remote user equipment served by the next-hop node and/or the paging message corresponding to the U2U Relay served by the next-hop node.

17. The method according to claim 15, after the second message is received from the previous-hop node in the first transmission direction, further comprising:
storing the requested system information block (SIB) indication information or system information (SI) message indication information in the second message; and/or
storing the user equipment identification information of the remote user equipment (Remote UE) in the second message.

18. The method according to any one of claims 14 to 17, wherein the third message is a UuMessageTransferSidelink message.

19. A UE-to-UE relay (U2U Relay), comprising:
a memory for storing a computer program;
a transceiver for receiving and sending data under control of a processor; and
the processor for reading the computer program in the memory and performing the following operations:
receiving a first message sent by a previous-hop node in a first transmission direction, wherein the first message comprises a system information request related parameter and/or a paging related parameter; and
sending a second message to a next-hop node in the first transmission direction, wherein the second message is generated on the basis of at least one first message;
wherein the system information request related parameter comprises requested system information block (SIB) indication information or system information (SI) message indication information;
the paging related parameter comprises user equipment identification information of the remote user equipment (Remote UE);
the previous-hop node comprises a remote user equipment or U2U Relay and the next-hop node comprises a U2U Relay or a user equipment-to-network relay (U2N Relay).

20. The U2U Relay according to claim 19, wherein sending the second message to the next-hop node in the first transmission direction comprises at least one of the following:
when the first message comprises the system information request related parameter, sending the second message to the next-hop node in the first transmission direction;
when the first message comprises the paging related parameter, sending the second message to the next-hop node in the first transmission direction;
when the first message comprises the system information request related parameter and a first condition is met, sending the second message to the next-hop node in the first transmission direction; or
when the first message comprises the paging related parameter and a second condition is met, sending the second message to the next-hop node in the first transmission direction.

21. The U2U Relay according to claim 19, wherein the first condition comprises one of the following conditions or a combination thereof:
an SIB indicated by the SIB indication information or an SI message indicated by the SI message indication information is not stored;
the SIB indicated by the SIB indication information or the SI message indicated by the SI message indication information is stored and the SIB or the SI message is invalid;
a time interval between a moment of receiving the first message containing the system information request related parameter and a moment of receiving the first message containing the system information request related parameter last time is greater than a first preset threshold T1;
a content of the system information request related parameter contained in the received first message is different from that of the system information request related parameter contained in the first message received last time; or
a content of the system information request related parameter contained in the first message is different from contents of the system information request related parameters contained in the first messages received last N times, wherein N is an integer greater than or equal to 1.

22. The U2U Relay according to claim 20, wherein the second condition comprises one of the following conditions or a combination thereof:
a time interval between a moment of receiving the first message containing the paging related parameter and a moment of receiving the first message containing the paging related parameter last time is greater than a first preset threshold T1; or
a content of the paging related parameter contained in the first message is different from contents of the paging related parameters contained in the first messages received last M times, wherein M is an integer greater than or equal to 1.

23. The U2U Relay according to claim 19, wherein the generation of the second message on the basis of the at least one first message comprises one of the following:
directly taking the first message as the second message;
generating the second message according to at least two first messages received from one or more previous-hop nodes in the first transmission direction; or
generating the second message according to at least one first message received from one or more previous-hop nodes in the first transmission direction and the system information request related parameter and/or the paging related parameter corresponding to the U2U Relay.

24. The U2U Relay according to claim 19, wherein generating the second message according to the at least two first messages received from the one or more previous-hop nodes in the first transmission direction comprises:
the second message comprising system information request related parameter and/or paging related parameter,
merging the system information request related parameters contained in the at least two first messages, and deleting repeated parts to obtain the system information request related parameter in the second message; and
merging the paging related parameters in the at least two first messages, and deleting repeated parts to obtain the paging related parameter in the second message.

25. The U2U Relay according to claim 19, wherein generating the second message according to the at least one first message received from the one or more previous-hop nodes in the first transmission direction and the system information request related parameter and/or the paging related parameter corresponding to the U2U Relay comprises:
the second message comprising system information request related parameter and/or paging related parameter,
merging the system information request related parameter contained in the at least one first message with the system information request related parameter corresponding to the U2U Relay, and deleting repeated parts to obtain the system information request related parameter in the second message; and
merging the paging related parameter in the at least one first message with the paging related parameter corresponding to the U2U Relay, and deleting repeated parts to obtain the paging related parameter in the second message.

26. The U2U Relay according to any one of claims 19 to 25, wherein the first message and the second message are RemoteUEInformationSidelink messages.

27. A UE-to-UE relay (U2U Relay), comprising:
a memory for storing a computer program;
a transceiver for receiving and sending data under control of a processor; and
the processor for reading the computer program in the memory and performing the following operations:
receiving a third message sent by a previous-hop node or a network device in a second transmission direction, wherein the third message comprises system information and/or a paging message; and
sending a fourth message to a next-hop node in the second transmission direction, wherein the fourth message is generated according to at least one third message;
wherein the system information at least comprises a system information block (SIB) or a system information (SI) message;
the previous-hop node comprises a UE-to-network relay (U2N Relay) or U2U Relay, and the next-hop node comprises a U2U Relay or Remote UE.

28. The U2U Relay according to claim 27, wherein the processor is further configured to read the computer program in the memory and perform the following operations:
storing all or part of a content contained in the third message, and all or part of the content contained in the third message comprises at least one of the following:
storing the SIB or the SI message or the paging message contained in the third message;
when the SIB contained in the third message is not identical to an SIB currently stored by a user equipment, storing a different SIB;
when the SI message contained in the third message is not identical to an SI message currently stored by the user equipment, storing a different SI message; or
when a time interval between a third message receiving moment and a last third message receiving moment is greater than a second preset threshold T2, storing the SIB or the SI message or the paging message contained in the third message.

29. The U2U Relay according to claim 27, wherein the fourth message comprises at least one of:
system information requested by a next-hop node of the U2U relay in the second transmission direction, wherein the system information requested by the next-hop node comprises an SIB or an SI message; or
the paging message corresponding to the next-hop node of the U2U relay in the second transmission direction or the U2U relay and/or the remote user equipment connected to the next-hop node.

30. The U2U Relay according to claim 27, wherein sending the fourth message to the next-hop node in the second transmission direction comprises:
in a case where a third condition is met, sending the fourth message to the next-hop node in the second transmission direction;
wherein the third condition comprises one of the following conditions or a combination thereof:
the paging message corresponding to the next-hop node in the second transmission direction is monitored;
the paging message corresponding to the remote user equipment served by the next-hop node in the second transmission direction is monitored;
the paging message corresponding to the U2U Relay served by the next-hop node in the second transmission direction is monitored;
the SIB or the SI message requested by the next-hop node in the second transmission direction is acquired;
an SIB or an SI message requested by the remote user equipment served by the next-hop node in the second transmission direction is acquired;
an SIB or an SI message requested by the U2U Relay served by the next-hop node in the second transmission direction is acquired; or
the system information is updated and the updated system information is acquired.

31. The U2U Relay according to any one of claims 27 to 30, wherein the third message and the fourth message are UuMessageTransferSidelink messages.

32. A UE-to-network relay (U2N Relay), comprising:
a memory for storing a computer program;
a transceiver for receiving and sending data under control of a processor; and
the processor for reading the computer program in the memory and performing the following operations:
receiving a second message sent by a previous-hop node in a first transmission direction, wherein the second message comprises a system information request related parameter and/or a paging related parameter; and
sending a third message to a next-hop node in a second transmission direction, wherein the third message is a response message to the second message;
wherein the system information request related parameter comprises requested system information block (SIB) indication information or system information (SI) message indication information;
the paging related parameter comprises user equipment identification information of a remote user equipment (Remote UE) or user equipment identification information of a U2U Relay UE served by the U2N Relay;
the previous-hop node comprises a U2U Relay, and the next-hop node comprises a U2U Relay.

33. The U2N Relay according to claim 32, wherein sending the third message to the next-hop node in the second transmission direction comprises:
in a case where a fourth condition is met, sending the third message to the next-hop node in the second transmission direction;
wherein the fourth condition comprises one of the following conditions or a combination thereof:
a paging message corresponding to the next-hop node in the second transmission direction is monitored;
a paging message corresponding to a remote user equipment served by the next-hop node in the second transmission direction is monitored;
a paging message corresponding to a U2U Relay served by the next-hop node in the second transmission direction is monitored;
the SIB or the SI message requested by the next-hop node in the second transmission direction is acquired;
an SIB or an SI message requested by the remote user equipment served by the next-hop node in the second transmission direction is acquired;
an SIB or an SI message requested by the U2U Relay served by the next-hop node in the second transmission direction is acquired; or
system information is updated and the updated system information is acquired.

34. The U2N Relay according to claim 32, wherein the third message is the response message to the second message, which comprises one of the following cases or a combination thereof:
the response message comprises a full or partial response to the SIB requested in the second message; or
the response message comprises the paging message corresponding to the remote user equipment served by the next-hop node and/or the paging message corresponding to the U2U Relay served by the next-hop node.

35. The U2N Relay according to claim 32, wherein after the second message is received from the previous-hop node in the first transmission direction, operations further comprise:
storing the requested system information block (SIB) indication information or system information (SI) message indication information in the second message; and/or
storing the user equipment identification information of the remote user equipment (Remote UE) in the second message.

36. The U2N Relay according to any one of claims 32 to 35, wherein the third message is a UuMessageTransferSidelink message.

37. A UE-to-UE relay (U2U Relay), comprising:
a first receiving unit configured to receive a first message sent by a previous-hop node in a first transmission direction, wherein the first message comprises a system information request related parameter and/or a paging related parameter; and
a first sending unit configured to send a second message to a next-hop node in the first transmission direction, wherein the second message is generated on the basis of at least one first message;
wherein the system information request related parameter comprises requested system information block (SIB) indication information and/or system information (SI) message indication information;
the paging related parameter comprises user equipment identification information of the remote user equipment (Remote UE);
the previous-hop node comprises a remote user equipment or U2U Relay and the next-hop node comprises a U2U Relay or a user equipment-to-network relay (U2N Relay).

38. The U2U Relay according to claim 37, wherein the first sending unit is further configured to send the second message to the next-hop node in the first transmission direction, which comprises at least one of the following:
when the first message comprises the system information request related parameter, sending the second message to the next-hop node in the first transmission direction;
when the first message comprises the paging related parameter, sending the second message to the next-hop node in the first transmission direction;
when the first message comprises the system information request related parameter, sending the second message to the next-hop node in the first transmission direction;
when the first message comprises the paging related parameter, sending the second message to the next-hop node in the first transmission direction;
when the first message comprises the system information request related parameter and a first condition is met, sending the second message to the next-hop node in the first transmission direction; or
when the first message comprises the paging related parameter and a second condition is met, sending the second message to the next-hop node in the first transmission direction.

39. The U2U Relay according to claim 38, wherein the first condition comprises one of the following conditions or a combination thereof:
an SIB indicated by the SIB indication information or an SI message indicated by the SI message indication information is not stored;
the SIB indicated by the SIB indication information or the SI message indicated by the SI message indication information is stored and the SIB or the SI message is invalid;
a time interval between a moment of receiving the first message containing the system information request related parameter and a moment of receiving the first message containing the system information request related parameter last time is greater than a first preset threshold T1; or
the content of the system information request related parameter contained in the first message is different from the contents of the system information request related parameters contained in the first messages received last N times, wherein N is an integer greater than or equal to 1.

40. The U2U Relay according to claim 38, wherein the second condition comprises one of the following conditions or a combination thereof:
a time interval between a moment of receiving the first message containing the paging related parameter and a moment of receiving the first message containing the paging related parameter last time is greater than a first preset threshold T1; or
a content of the paging related parameter contained in the first message is different from contents of the paging related parameters contained in the first messages received last M times, wherein M is an integer greater than or equal to 1.

41. The U2U Relay according to claim 37, wherein the first sending unit is further configured to generate the second message according to the at least one first message, which comprises at least one of the following:
directly taking the first message as the second message;
generating the second message according to at least two first messages received from one or more previous-hop nodes in the first transmission direction; or
generating the second message according to at least one first message received from one or more previous-hop nodes in the first transmission direction and the system information request related parameter and/or the paging related parameter corresponding to the U2U Relay.

42. The U2U Relay according to claim **41,** wherein generating the second message according to the at least two first messages received from the one or more previous-hop nodes in the first transmission direction comprises:
the second message comprising system information request related parameter and/or paging related parameter,
merging the system information request related parameters contained in the at least two first messages, and deleting repeated parts to obtain the system information request related parameter in the second message; and
merging the paging related parameters in the at least two first messages, and deleting repeated parts to obtain the paging related parameter in the second message.

43. The U2U Relay according to claim 41, wherein generating the second message according to the at least one first message received from the one or more previous-hop nodes in the first transmission direction and the system information request related parameter and/or the paging related parameter corresponding to the U2U Relay comprises:
the second message comprising system information request related parameter and/or paging related parameter,
merging the system information request related parameter contained in the at least one first message with the system information request related parameter corresponding to the U2U Relay, and deleting repeated parts to obtain the system information request related parameter in the second message; and
merging the paging related parameter in the at least one first message with the paging related parameter corresponding to the U2U Relay, and deleting repeated parts to obtain the paging related parameter in the second message.

44. The U2U Relay according to any one of claims 37 to 43, wherein the first message and the second message are RemoteUEInformationSidelink messages.

45. A UE-to-UE relay (U2U Relay), comprising:
a second receiving unit configured to receive a third message sent by a previous-hop node or a network device in a second transmission direction, wherein the third message comprises a system information related parameter and/or a paging message; and
a second sending unit configured to send a fourth message to a next-hop node in the second transmission direction, wherein the fourth message is generated according to at least one third message;
wherein the system information related parameter at least comprises a system information block (SIB) or a system information (SI) message;
the previous-hop node comprises a user equipment-to-network relay (U2N Relay) or U2U Relay, and the next-hop node comprises a U2U Relay or Remote UE.

46. The U2U Relay according to claim 45, further comprising a second storage unit configured to:
store all or part of a content contained in the third message, and all or part of the content contained in the third message comprises at least one of the following:
storing the SIB or the SI message or the paging message contained in the third message;
when the SIB contained in the third message is not identical to an SIB currently stored by a user equipment, storing a different SIB;
when the SI message contained in the third message is not identical to an SI message currently stored by the user equipment, storing a different SI message; or
when a time interval between a third message receiving moment and a last third message receiving moment is greater than a second preset threshold T2, storing the SIB or the SI message or the paging message contained in the third message.

47. The U2U Relay according to claim 45, wherein the fourth message comprises at least one of:
system information requested by a next-hop node of the U2U relay in the second transmission direction, wherein the system information requested by the next-hop node comprises an SIB or an SI message; or
the paging message corresponding to the next-hop node of the U2U relay in the second transmission direction or the U2U relay and/or the remote user equipment connected to the next-hop node.

48. The U2U Relay according to claim 45, wherein sending the fourth message to the next-hop node in the second transmission direction comprises:
in a case where a third condition is met, sending the fourth message to the next-hop node in the second transmission direction;
wherein the third condition comprises one of the following conditions or a combination thereof:
the paging message corresponding to the next-hop node in the second transmission direction is monitored;
the paging message corresponding to the remote user equipment served by the next-hop node in the second transmission direction is monitored;
the paging message corresponding to the U2U Relay served by the next-hop node in the second transmission direction is monitored;
the SIB or the SI message requested by the next-hop node in the second transmission direction is acquired;
an SIB or an SI message requested by the remote user equipment served by the next-hop node in the second transmission direction is acquired;
an SIB or an SI message requested by the U2U Relay served by the next-hop node in the second transmission direction is acquired; or
the system information is updated and the updated system information is acquired.

49. The U2U Relay according to any one of claims 45 to 48, wherein the third message and the fourth message are UuMessageTransferSidelink messages.

50. A UE-to-network relay (U2N Relay), comprising:
a third receiving unit configured to receive a second message sent by a previous-hop node in a first transmission direction, wherein the second message comprises a system information request related parameter and/or a paging related parameter; and
a third sending unit configured to send a third message to a next-hop node in a second transmission direction, wherein the third message is a response message to the second message;
wherein the system information request related parameter comprises requested system information block (SIB) indication information and/or system information (SI) message indication information;
the paging related parameter comprises user equipment identification information of the remote user equipment (Remote UE);
the previous-hop node comprises a U2U Relay, and the next-hop node comprises a U2U Relay.

51. The U2N Relay according to claim 50, wherein the third sending unit 1802 is further configured to:
in a case where a fourth condition is met, send the third message to the next-hop node in the second transmission direction;
wherein the fourth condition comprises one of the following conditions or a combination thereof:
a paging message corresponding to the next-hop node in the second transmission direction is monitored;
a paging message corresponding to a remote user equipment served by the next-hop node in the second transmission direction is monitored;
a paging message corresponding to a U2U Relay served by the next-hop node in the second transmission direction is monitored;
the SIB or the SI message requested by the next-hop node in the second transmission direction is acquired;
an SIB or an SI message requested by the remote user equipment served by the next-hop node in the second transmission direction is acquired;
an SIB or an SI message requested by the U2U Relay served by the next-hop node in the second transmission direction is acquired; or
system information is updated and the updated system information is acquired.

52. The U2N Relay according to claim 50, wherein the third message is the response message to the second message, which comprises one of the following cases or a combination thereof:
the response message comprises a full or partial response to the SIB requested in the second message; or
the response message comprises the paging message corresponding to the remote user equipment served by the next-hop node and/or the paging message corresponding to the U2U Relay served by the next-hop node and/or the paging message corresponding to the U2U Relay served by the next-hop node.

53. The U2N Relay according to claim 51, wherein after receiving the second message from the previous-hop node in the first transmission direction, the third receiving unit is further configured to:
store the requested system information block (SIB) indication information or system information (SI) message indication information in the second message; and/or
store the user equipment identification information of the remote user equipment (Remote UE) in the second message.

54. The U2N Relay according to any one of claims 50 to 53, wherein the third message is a UuMessageTransferSidelink message.

55. A processor-readable storage medium having a computer program stored thereon, wherein the computer program, when executed by a processor, implements the steps of the information transmission method according to any one of claims 1 to 8, or the steps of the information transmission method according to any one of claims 9 to 13, or the steps of the information transmission method according to any one of claims 14 to 18.
